# EUROPEAN PATENT APPLICATION

(11) **EP 4 797 819 A1**
(43) Date of publication of application: **26.08.2026**
(21) Application number: 24890765.1
(22) Date of filing: 14.11.2024
(51) Int. Cl.: H04W 56/00

(54) **COMMUNICATION METHOD AND RELATED APPARATUS**

(30) Priority: 16.11.2023 CN 202311540375
(71) Applicant: HUAWEI TECHNOLOGIES CO., LTD., Shenzhen 518129 (CN)
(72) Inventor: QU, Weilin, Shenzhen, Guangdong 518129 (CN); WU, Yiling, Shenzhen, Guangdong 518129 (CN); LUO, Zhihu, Shenzhen, Guangdong 518129 (CN); JIN, Zhe, Shenzhen, Guangdong 518129 (CN)
(74) Representative: MERH-IP Matias Erny Reichl Hoffmann Patentanwälte PartG mbB
(86) International application number: PCT/CN2024/132021
(87) International publication number: WO 2025/103410

(57) **Abstract**

A communication method and a related apparatus are provided. The method includes: determining a synchronization signal, and sending the synchronization signal to a tag on a first time domain resource and a first frequency domain resource. The first time domain resource includes M orthogonal frequency division multiplexing OFDM symbols, the first frequency domain resource includes N*12 subcarriers, and both M and N are positive integers. The modulation scheme of the synchronization signal is on-off keying OOK. The synchronization signal includes a first signal and a second signal, where the first signal indicates that the second signal is after and adjacent to the first signal, and the second signal is used for time calibration; and both the duration T1 of the first signal and the duration T2 of the second signal is a fixed value, and the sum of T1 and T2 is equal to the duration of the M OFDM symbols. This application is compatible with the design of synchronization signals for tags (that is, passive tags or semi-passive tags) under different downlink signal bandwidths, thereby helping improve communication performance.

## Description

This application claims priority to Chinese Patent Application No. 202311540375.2, filed with the China National Intellectual Property Administration on November 16, 2023 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

As machine-type communication (machine-type communication, mMTC) and internet of things (internet of things, IoT) communication in the 5th generation (5th generation, 5G) new radio (new radio, NR) are increasingly widely applied, a quantity of connections of IoT devices is increasing day by day. To reduce costs, power consumption, and the like of the IoT devices, the 3rd generation partnership project (3rd generation partnership project, 3GPP) proposes a passive internet of things (passive IoT) communication technology in the 5G NR system to meet requirements for low cost and low power consumption in IoT applications.

In a passive IoT system, a reader (reader) sends a waveform with a high level to a passive tag (passive tag), and after receiving energy, the passive tag reflects information to the reader through a reverse link. Currently, the reader sends a synchronization signal mainly by using pulse interval encoding (pulse interval encoding, PIE), and the design of the synchronization signal considers only the case of a downlink signal bandwidth being 12 subcarriers, and therefore the synchronization signal is not compatible with a wider downlink signal bandwidth.

### SUMMARY

This application provides a communication method and a related apparatus, which are compatible with the design of synchronization signals for passive tags under different downlink signal bandwidths, thereby helping improve communication performance.

According to a first aspect, this application provides a communication method. Optionally, the method may be performed by a network device, a component or an apparatus (for example, a processor, a chip, or a chip system) used in the network device, or a logical module or software that can implement all or some functions of the network device. The method includes:
determining a synchronization signal;
sending the synchronization signal on a first time domain resource and a first frequency domain resource, where the first time domain resource includes M orthogonal frequency division multiplexing OFDM symbols, the first frequency domain resource includes N*12 subcarriers, and both M and N are positive integers, where
a modulation scheme of the synchronization signal is on-off keying OOK, the synchronization signal includes a first signal and a second signal, the first signal indicates that the second signal is after and adjacent to the first signal, and the second signal is used for time calibration; and both a duration T1 of the first signal and a duration T2 of the second signal are fixed values, and the sum of T1 and T2 is equal to a duration of the M OFDM symbols.

In this application, the synchronization signal is a signal sent by the network device to a passive tag or a semi-passive tag. The synchronization signal may also be referred to as a synchronization signal of the passive tag, a preamble signal, a preamble signal of a data signal, a preamble signal of the passive tag, a preamble signal of a passive tag data signal, or the like. These names are merely examples, or may be other names in a specific implementation. This is not specifically limited in this application. It should be noted that, different from design in which only a downlink signal bandwidth of 12 subcarriers is considered during current design of the synchronization signal, this application is compatible with design of the synchronization signal of the passive tag in different downlink signal bandwidths, thereby improving flexibility of downlink transmission and helping improve communication performance. In addition, in different bandwidths, keeping the duration T1 of the first signal unchanged helps satisfy a specified duration of a passive tag delimiter, and keeping the duration T2 of the second signal unchanged facilitates clock detection.

In a possible design, any level included in the first signal is a first level.

In this implementation, the first level may be understood as a low level, an OOK symbol {0}, or an OOK chip {0}. The first signal is an all-low-level signal. In this way, the first signal can enable a receiving circuit to have sufficient buffer time before the second signal and the data signal are received, and avoid confusion between the first signal and a subsequent second signal and data signal as much as possible, thereby helping improve demodulation performance.

In a possible design, the second signal includes at least one first level and at least one second level, a quantity of first levels included in the second signal is equal to a quantity of second levels, the second level is higher than the first level, and a duration of the second level is equal to a duration of the first level.

In this implementation, the second level may be understood as a high level, an OOK symbol {1}, or an OOK chip {1}. The quantity of first levels included in the second signal is equal to the quantity of second levels, and the duration of the second level is equal to the duration of the first level, so that design of the synchronization signal including the second signal can satisfy level time detection of subsequent data through Manchester encoding. Manchester encoding helps improve communication performance of data transmission.

In a possible design, a level adjacent to any first level included in the second signal is the second level, a level adjacent to any second level included in the second signal is the first level, and the second level is higher than the first level.

In this implementation, the second signal may be specifically a signal with alternating levels {0} and {1}, and a quantity of {0} is equal to a quantity of {1}. For example, the second signal may be {010101}. Alternatively, the second signal may be a signal with alternating levels {1} and {0}, and a quantity of {0} is equal to a quantity of {1}. For example, the second signal may be {101010}. Such design of a signal sequence in which different alternating levels is simple, and a rising edge and a falling edge periodically appear, which helps reduce detection complexity per unit level time, and can ensure detection performance.

In a possible design, a duration of one OFDM symbol is T;
the duration T1 of the first signal satisfies: $T 1 = M * T * X ;$ and
the duration T2 of the second signal satisfies: $T 2 = M * T * \left(1-X\right) ,$
where 0<X<1, and when M=1, a value of X is associated with a subcarrier spacing.

In this implementation, the duration T1 of the first signal and the duration T2 of the second signal that satisfy the foregoing formulas may adapt to adaptive design of fixed time of the first signal and fixed time of the second signal in different signal bandwidths. In addition, when M=1, the value of X is associated with the subcarrier spacing, which can satisfy a specified duration of a passive tag delimiter in different subcarrier spacings.

In a possible design, a quantity P1 of levels included in the first signal is directly proportional to a value of N, and a quantity P2 of levels included in the second signal is directly proportional to the value of N.

In this implementation, the quantity P1 of levels included in the first signal and the quantity P2 of levels included in the second signal are directly proportional to the value of N, so that design of the first signal in different signal bandwidths can be adapted, thereby improving applicability of the solution.

In a possible design, the quantity P1 of levels included in the first signal satisfies: $P 1 = M * K * N * X ;$ and the quantity P2 of levels included in the second signal satisfies: $P 2 = M * K * N * \left(1-X\right) ,$ where $0 < X < 1 ,$ K is a quantity of levels included in one OFDM symbol when N is equal to 1, and K is a positive integer.

In this implementation, the quantities of levels that satisfy the foregoing formulas may meet requirements for a quantity of rising edges and a quantity of falling edges of a time calibration level, thereby ensuring performance of time detection.

In a possible design, when K is equal to 6, the quantity P1 of levels included in the first signal is an integer not less than 2, and the quantity P2 of levels included in the second signal is an integer not less than 2 or an integer not less than 4.

In this implementation, the quantity of levels included in the second signal is greater than or equal to 2 or 4 (preferably), which ensures a quantity of levels that can be used when the tag performs clock calibration, and helps improve accuracy of obtaining a level boundary (a symbol boundary) during detection.

In a possible design, X is 1/3 or 1/2 when M is equal to 1 and K is equal to 6.

In this implementation, X is 1/3 or 1/2 when M is equal to 1 and K is equal to 6, which can effectively ensure buffer time for data receiving when the tag is started (that is, when X is 1/3 or 1/2, in different bandwidths, the duration of the first signal is not shorter than a specified duration of a passive tag delimiter (for example, the duration of the delimiter is not less than 12.5 µs)).

According to a second aspect, this application provides a communication method. Optionally, the method may be performed by a network device, a component or an apparatus (for example, a processor, a chip, or a chip system) used in the network device, or a logical module or software that can implement all or some functions of the network device. The method includes:
determining a synchronization signal; and
sending the synchronization signal on a first time domain resource and a first frequency domain resource, where a duration of the first time domain resource is less than or equal to a duration of M orthogonal frequency division multiplexing OFDM symbols, the first frequency domain resource includes N*12 subcarriers, and both M and N are positive integers, where
a modulation scheme of the synchronization signal is on-off keying OOK, the synchronization signal includes a first signal and a second signal, the first signal indicates that the second signal is after and adjacent to the first signal, the second signal is used for time calibration, and both a duration T1 of the first signal and a quantity P2 of levels included in the second signal are fixed values.

In this application, the synchronization signal is a signal sent by the network device to a passive tag or a semi-passive tag. Different from design in which only a downlink signal bandwidth of 12 subcarriers is considered during current design of the synchronization signal, this application is compatible with design of the synchronization signal of the passive tag in different downlink signal bandwidths, thereby helping improve communication performance. In addition, in different bandwidths, keeping the duration T1 of the first signal unchanged helps satisfy a specified duration of a passive tag delimiter, and keeping the quantity P2 of levels included in the second signal unchanged can effectively ensure a quantity of levels that can be used when the tag performs clock calibration, and also improve a peak rate of downlink transmission.

In a possible design, any level included in the first signal is a first level.

In a possible design, the second signal includes at least one first level and at least one second level, a quantity of first levels included in the second signal is equal to a quantity of second levels, the second level is higher than the first level, and a duration of the second level is equal to a duration of the first level.

In a possible design, a level adjacent to any first level included in the second signal is the second level, a level adjacent to any second level included in the second signal is the first level, and the second level is higher than the first level.

In a possible design, a duration T2 of the second signal is inversely proportional to a value of N.

In this implementation, the duration T2 of the second signal is inversely proportional to the value of N, which is adaptive design for fixed time of the first signal and a fixed quantity of levels in the second signal. This helps improve flexibility of downlink transmission in different bandwidths, and improve a transmission peak rate.

In a possible design, a duration of one OFDM symbol is T;
the duration T1 of the first signal satisfies: $T 1 = M * T * X ;$ and
the duration T2 of the second signal satisfies: $T 2 = M * T * \left(1-X\right) / N ,$
where 0<X<1, and when M=1, a value of X is associated with a subcarrier spacing.

In a possible design, a quantity P1 of levels included in the first signal is directly proportional to a value of N.

In a possible design, the quantity P1 of levels included in the first signal satisfies: $P 1 = M * K * N * X ,$ where $0 < X < 1 ,$ K is a quantity of levels included in one OFDM symbol when N is equal to 1, and K is a positive integer.

In a possible design, when K is equal to 6, the quantity P1 of levels included in the first signal is an integer not less than 2, and the quantity P2 of levels included in the second signal is an integer not less than 2 or an integer not less than 4.

In this implementation, the quantity of levels included in the second signal is greater than or equal to 2 or 4 (preferably), which ensures a quantity of levels that can be used when the tag performs clock calibration, and helps improve accuracy of obtaining a level boundary (a symbol boundary) during detection.

In a possible design, X is 1/3 or 1/2 when M is equal to 1 and K is equal to 6.

In this implementation, X is 1/3 or 1/2 when M is equal to 1 and K is equal to 6, which can effectively ensure buffer time for data receiving when the tag is started (that is, when X is 1/3 or 1/2, in different bandwidths, the duration of the first signal is not shorter than a specified duration of a passive tag delimiter (for example, the duration of the delimiter is not less than 12.5 µs)).

In a possible design, the duration of the first time domain resource is equal to the duration of the M OFDM symbols; and the synchronization signal further includes a third signal, the third signal is before the first signal, and any level included in the third signal is a second level;
a duration T3 of the third signal satisfies: $T 3 = M * T - T 1 - T 2 ;$ and
a quantity P3 of levels included in the third signal satisfies: $P 3 = M * K * N - P 1 - P 2 ,$ where
K is a quantity of levels included in one OFDM symbol when N is equal to 1, and K is a positive integer.

In this implementation, introduction of the third signal enables the tag to obtain more energy, thereby helping maintain normal communication.

In a possible design, P2 is equal to 4.

In this implementation, the quantity of levels included in the second signal is fixed to 4, so that a quantity of levels that can be used when the tag performs clock calibration can be ensured. In addition, a transmission peak rate of the tag is maximized as much as possible.

According to a third aspect, this application provides a communication method. Optionally, the method may be performed by a network device, a component or an apparatus (for example, a processor, a chip, or a chip system) used in the network device, or a logical module or software that can implement all or some functions of the network device. The method includes:
determining a synchronization signal;
sending the synchronization signal on a first time domain resource and a first frequency domain resource, where a duration of the first time domain resource is less than or equal to a duration of M orthogonal frequency division multiplexing OFDM symbols, the first frequency domain resource includes N×12 subcarriers, and both M and N are positive integers, where
a modulation scheme of the synchronization signal is on-off keying OOK, the synchronization signal includes a first signal and a second signal, the first signal indicates that the second signal is after and adjacent to the first signal, the second signal is used for time calibration, the sum of a duration T1 of the first signal and a duration of a first level in the second signal is a fixed value, and a quantity P2 of levels included in the second signal is a fixed value.

In this application, the synchronization signal is a signal sent by the network device to a passive tag or a semi-passive tag. Different from design in which only a downlink signal bandwidth of 12 subcarriers is considered during current design of the synchronization signal, this application is compatible with design of the synchronization signal of the passive tag in different downlink signal bandwidths, thereby helping improve communication performance. In addition, in different bandwidths, keeping the sum of the duration T1 of the first signal and the duration of the first level in the second signal unchanged helps satisfy a specified duration of a passive tag delimiter, and keeping the duration T2 of the second signal unchanged facilitates clock detection.

In a possible design, any level included in the first signal is a first level.

In a possible design, the second signal includes at least one first level and at least one second level, a quantity of first levels included in the second signal is equal to a quantity of second levels, the second level is higher than the first level, and a duration of the second level is equal to a duration of the first level.

In a possible design, a level adjacent to any first level included in the second signal is the second level, a level adjacent to any second level included in the second signal is the first level, and the second level is higher than the first level.

In a possible design, a duration T2 of the second signal is inversely proportional to a value of N.

In this implementation, the duration T2 of the second signal is inversely proportional to the value of N, which is adaptive design for fixed time of the first signal and a 1^{st} level in the second signal and a fixed quantity of levels in the second signal. This helps improve flexibility of downlink transmission in different bandwidths, and improve a transmission peak rate.

In a possible design, a duration of one OFDM symbol is T;
the duration T1 of the first signal satisfies: $T 1 = M * T * X - M * T / K * N ;$ and
the duration T2 of the second signal satisfies: $T 2 = M * T * \left(1-X\right) / N ,$
where 0<X<1, and when M=1, a value of X is associated with a subcarrier spacing.

In a possible design, the sum of a quantity P1 of levels included in the first signal and 1 is directly proportional to a value of N.

In a possible design, the quantity P1 of levels included in the first signal satisfies: $P 1 = M * K * N * X - 1 ,$ where $0 < X < 1 ,$ K is a quantity of levels included in one OFDM symbol when N is equal to 1, and K is a positive integer.

In a possible design, when K is equal to 6, the quantity P1 of levels included in the first signal is an integer not less than 2, and the quantity P2 of levels included in the second signal is an integer not less than 2 or an integer not less than 4.

In this implementation, the quantity of levels included in the second signal is greater than or equal to 2 or 4 (preferably), which ensures a quantity of levels that can be used when the tag performs clock calibration, and helps improve accuracy of obtaining a level boundary (a symbol boundary) during detection.

In a possible design, X is 1/3 or 1/2 when M is equal to 1 and K is equal to 6.

In this implementation, X is 1/3 or 1/2 when M is equal to 1 and K is equal to 6, which can effectively ensure buffer time for data receiving when the tag is started (that is, when X is 1/3 or 1/2, in different bandwidths, the duration of the first signal is not shorter than a specified duration of a passive tag delimiter (for example, the duration of the delimiter is not less than 12.5 µs)).

In a possible design, the duration of the first time domain resource is equal to the duration of the M OFDM symbols; and the synchronization signal further includes a third signal, the third signal is before the first signal, and any level included in the third signal is a second level;
a duration T3 of the third signal satisfies: $T 3 = M * T - T 1 - T 2 ;$ and
a quantity P3 of levels included in the third signal satisfies: $P 3 = M * K * N - P 1 - P 2 ,$ where
K is a quantity of levels included in one OFDM symbol when N is equal to 1, and K is a positive integer.

In this implementation, introduction of the third signal enables the tag to obtain more energy, thereby helping maintain normal communication.

In a possible design, P2 is equal to 4.

In this implementation, the quantity of levels included in the second signal is fixed to 4, so that a quantity of levels that can be used when the tag performs clock calibration can be ensured. In addition, a transmission peak rate of the tag is maximized as much as possible.

According to a fourth aspect, this application provides a communication method. Optionally, the method may be performed by a tag, a component or an apparatus (for example, a processor, a chip, or a chip system) used in the tag, or a logical module or software that can implement all or some functions of the tag. The tag may be a passive tag or a semi-passive tag. The method includes:
receiving a synchronization signal on a first time domain resource and a first frequency domain resource, where the first time domain resource includes M orthogonal frequency division multiplexing OFDM symbols, the first frequency domain resource includes N*12 subcarriers, and both M and N are positive integers, where
a modulation scheme of the synchronization signal is on-off keying OOK, the synchronization signal includes a first signal and a second signal, the first signal indicates that the second signal is after and adjacent to the first signal, and the second signal is used for time calibration; and both a duration T1 of the first signal and a duration T2 of the second signal are fixed values, and the sum of T1 and T2 is equal to a duration of the M OFDM symbols.

In a possible design, any level included in the first signal is a first level.

In a possible design, the second signal includes at least one first level and at least one second level, a quantity of first levels included in the second signal is equal to a quantity of second levels, the second level is higher than the first level, and a duration of the second level is equal to a duration of the first level.

In a possible design, a level adjacent to any first level included in the second signal is the second level, a level adjacent to any second level included in the second signal is the first level, and the second level is higher than the first level.

In a possible design, a duration of one OFDM symbol is T;
the duration T1 of the first signal satisfies: $T 1 = M * T * X ;$ and
the duration T2 of the second signal satisfies: $T 2 = M * T * \left(1-X\right) ,$
where 0<X<1, and when M=1, a value of X is associated with a subcarrier spacing.

In a possible design, a quantity P1 of levels included in the first signal is directly proportional to a value of N, and a quantity P2 of levels included in the second signal is directly proportional to the value of N.

In a possible design, the quantity P1 of levels included in the first signal satisfies: $P 1 = M * K * N * X ;$ and
the quantity P2 of levels included in the second signal satisfies: $P 2 = M * K * N * \left(1-X\right) ,$ where $0 < X < 1 ,$ K is a quantity of levels included in one OFDM symbol when N is equal to 1, and K is a positive integer.

In a possible design, when K is equal to 6, the quantity P1 of levels included in the first signal is an integer not less than 2, and the quantity P2 of levels included in the second signal is an integer not less than 2 or an integer not less than 4.

In a possible design, X is 1/3 or 1/2 when M is equal to 1 and K is equal to 6.

According to a fifth aspect, this application provides a communication method. Optionally, the method may be performed by a tag, a component or an apparatus (for example, a processor, a chip, or a chip system) used in the tag, or a logical module or software that can implement all or some functions of the tag. The tag may be a passive tag or a semi-passive tag. The method includes:
receiving a synchronization signal on a first time domain resource and a first frequency domain resource, where a duration of the first time domain resource is less than or equal to a duration of M orthogonal frequency division multiplexing OFDM symbols, the first frequency domain resource includes N*12 subcarriers, and both M and N are positive integers, where
a modulation scheme of the synchronization signal is on-off keying OOK, the synchronization signal includes a first signal and a second signal, the first signal indicates that the second signal is after and adjacent to the first signal, the second signal is used for time calibration, and both a duration T1 of the first signal and a quantity P2 of levels included in the second signal are fixed values.

In a possible design, any level included in the first signal is a first level.

In a possible design, the second signal includes at least one first level and at least one second level, a quantity of first levels included in the second signal is equal to a quantity of second levels, the second level is higher than the first level, and a duration of the second level is equal to a duration of the first level.

In a possible design, a level adjacent to any first level included in the second signal is the second level, a level adjacent to any second level included in the second signal is the first level, and the second level is higher than the first level.

In a possible design, a duration T2 of the second signal is inversely proportional to a value of N.

In a possible design, a duration of one OFDM symbol is T;
the duration T1 of the first signal satisfies: $T 1 = M * T * X ;$ and
the duration T2 of the second signal satisfies: $T 2 = M * T * \left(1-X\right) / N ,$
where 0<X<1, and when M=1, a value of X is associated with a subcarrier spacing.

In a possible design, a quantity P1 of levels included in the first signal is directly proportional to a value of N.

In a possible design, the quantity P1 of levels included in the first signal satisfies: $P 1 = M * K * N * X ,$ where $0 < X < 1 ,$ K is a quantity of levels included in one OFDM symbol when N is equal to 1, and K is a positive integer.

In a possible design, when K is equal to 6, the quantity P1 of levels included in the first signal is an integer not less than 2, and the quantity P2 of levels included in the second signal is an integer not less than 2 or an integer not less than 4.

In a possible design, X is 1/3 or 1/2 when M is equal to 1 and K is equal to 6.

In a possible design, the duration of the first time domain resource is equal to the duration of the M OFDM symbols; and the synchronization signal further includes a third signal, the third signal is before the first signal, and any level included in the third signal is a second level;
a duration T3 of the third signal satisfies: $T 3 = M * T - T 1 - T 2 ;$ and
a quantity P3 of levels included in the third signal satisfies: $P 3 = M * K * N - P 1 - P 2 ,$ where
K is a quantity of levels included in one OFDM symbol when N is equal to 1, and K is a positive integer.

In a possible design, P2 is equal to 4.

According to a sixth aspect, this application provides a communication method. Optionally, the method may be performed by a tag, a component or an apparatus (for example, a processor, a chip, or a chip system) used in the tag, or a logical module or software that can implement all or some functions of the tag. The tag may be a passive tag or a semi-passive tag. The method includes:
receiving a synchronization signal on a first time domain resource and a first frequency domain resource, where a duration of the first time domain resource is less than or equal to a duration of M orthogonal frequency division multiplexing OFDM symbols, the first frequency domain resource includes N×12 subcarriers, and both M and N are positive integers, where
a modulation scheme of the synchronization signal is on-off keying OOK, the synchronization signal includes a first signal and a second signal, the first signal indicates that the second signal is after and adjacent to the first signal, the second signal is used for time calibration, the sum of a duration T1 of the first signal and a duration of a first level in the second signal is a fixed value, and a quantity P2 of levels included in the second signal is a fixed value.

In a possible design, any level included in the first signal is a first level.

In a possible design, the second signal includes at least one first level and at least one second level, a quantity of first levels included in the second signal is equal to a quantity of second levels, the second level is higher than the first level, and a duration of the second level is equal to a duration of the first level.

In a possible design, a level adjacent to any first level included in the second signal is the second level, a level adjacent to any second level included in the second signal is the first level, and the second level is higher than the first level.

In a possible design, a duration T2 of the second signal is inversely proportional to a value of N.

In a possible design, a duration of one OFDM symbol is T;
the duration T1 of the first signal satisfies: $T 1 = M * T * X - M * T / K * N ;$ and
the duration T2 of the second signal satisfies: $T 2 = M * T * \left(1-X\right) / N ,$
where 0<X<1, and when M=1, a value of X is associated with a subcarrier spacing.

In a possible design, the sum of a quantity P1 of levels included in the first signal and 1 is directly proportional to a value of N.

In a possible design, the quantity P1 of levels included in the first signal satisfies: $P 1 = M * K * N * X - 1 ,$ where $0 < X < 1 ,$ K is a quantity of levels included in one OFDM symbol when N is equal to 1, and K is a positive integer.

In a possible design, when K is equal to 6, the quantity P1 of levels included in the first signal is an integer not less than 2, and the quantity P2 of levels included in the second signal is an integer not less than 2 or an integer not less than 4.

In a possible design, X is 1/3 or 1/2 when M is equal to 1 and K is equal to 6.

In a possible design, the duration of the first time domain resource is equal to the duration of the M OFDM symbols; and the synchronization signal further includes a third signal, the third signal is before the first signal, and any level included in the third signal is a second level;
a duration T3 of the third signal satisfies: $T 3 = M * T - T 1 - T 2 ;$ and
a quantity P3 of levels included in the third signal satisfies: $P 3 = M * K * N - P 1 - P 2 ,$ where
K is a quantity of levels included in one OFDM symbol when N is equal to 1, and K is a positive integer.

In a possible design, P2 is equal to 4.

According to a seventh aspect, this application provides a communication apparatus. The communication apparatus may be a network device, or a module or chip in the network device. The communication apparatus includes:
a processing unit, configured to determine a synchronization signal; and
a transceiver unit, configured to send the synchronization signal on a first time domain resource and a first frequency domain resource, where the first time domain resource includes M orthogonal frequency division multiplexing OFDM symbols, the first frequency domain resource includes N*12 subcarriers, and both M and N are positive integers, where
a modulation scheme of the synchronization signal is on-off keying OOK, the synchronization signal includes a first signal and a second signal, the first signal indicates that the second signal is after and adjacent to the first signal, the second signal is used for time calibration; and both a duration T1 of the first signal and a duration T2 of the second signal are fixed values, and the sum of T1 and T2 is equal to a duration of the M OFDM symbols.

In a possible design, any level included in the first signal is a first level.

In a possible design, the second signal includes at least one first level and at least one second level, a quantity of first levels included in the second signal is equal to a quantity of second levels, the second level is higher than the first level, and a duration of the second level is equal to a duration of the first level.

In a possible design, a level adjacent to any first level included in the second signal is the second level, a level adjacent to any second level included in the second signal is the first level, and the second level is higher than the first level.

In a possible design, a duration of one OFDM symbol is T;
the duration T1 of the first signal satisfies: $T 1 = M * T * X ;$ and
the duration T2 of the second signal satisfies: $T 2 = M * T * \left(1-X\right) ,$
where 0<X<1, and when M=1, a value of X is associated with a subcarrier spacing.

In a possible design, a quantity P1 of levels included in the first signal is directly proportional to a value of N, and a quantity P2 of levels included in the second signal is directly proportional to the value of N.

In a possible design, the quantity P1 of levels included in the first signal satisfies: $P 1 = M * K * N * X ;$ and
the quantity P2 of levels included in the second signal satisfies: $P 2 = M * K * N * \left(1-X\right) ,$ where $0 < X < 1 ,$ K is a quantity of levels included in one OFDM symbol when N is equal to 1, and K is a positive integer.

In a possible design, when K is equal to 6, the quantity P1 of levels included in the first signal is an integer not less than 2, and the quantity P2 of levels included in the second signal is an integer not less than 2 or an integer not less than 4.

In a possible design, X is 1/3 or 1/2 when M is equal to 1 and K is equal to 6.

According to an eighth aspect, this application provides a communication apparatus. The communication apparatus may be a network device, or a module or chip in the network device. The communication apparatus includes:
a processing unit, configured to determine a synchronization signal; and
a transceiver unit, configured to send the synchronization signal on a first time domain resource and a first frequency domain resource, where a duration of the first time domain resource is less than or equal to a duration of M orthogonal frequency division multiplexing OFDM symbols, the first frequency domain resource includes N*12 subcarriers, and both M and N are positive integers, where
a modulation scheme of the synchronization signal is on-off keying OOK, the synchronization signal includes a first signal and a second signal, the first signal indicates that the second signal is after and adjacent to the first signal, the second signal is used for time calibration, and both a duration T1 of the first signal and a quantity P2 of levels included in the second signal are fixed values.

In a possible design, any level included in the first signal is a first level.

In a possible design, the second signal includes at least one first level and at least one second level, a quantity of first levels included in the second signal is equal to a quantity of second levels, the second level is higher than the first level, and a duration of the second level is equal to a duration of the first level.

In a possible design, a level adjacent to any first level included in the second signal is the second level, a level adjacent to any second level included in the second signal is the first level, and the second level is higher than the first level.

In a possible design, a duration T2 of the second signal is inversely proportional to a value of N.

In a possible design, a duration of one OFDM symbol is T;
the duration T1 of the first signal satisfies: $T 1 = M * T * X ;$ and
the duration T2 of the second signal satisfies: $T 2 = M * T * \left(1-X\right) / N ,$
where 0<X<1, and when M=1, a value of X is associated with a subcarrier spacing.

In a possible design, a quantity P1 of levels included in the first signal is directly proportional to a value of N.

In a possible design, the quantity P1 of levels included in the first signal satisfies: $P 1 = M * K * N * X ,$ where $0 < X < 1 ,$ K is a quantity of levels included in one OFDM symbol when N is equal to 1, and K is a positive integer.

In a possible design, when K is equal to 6, the quantity P1 of levels included in the first signal is an integer not less than 2, and the quantity P2 of levels included in the second signal is an integer not less than 2 or an integer not less than 4.

In a possible design, X is 1/3 or 1/2 when M is equal to 1 and K is equal to 6.

In a possible design, the duration of the first time domain resource is equal to the duration of the M OFDM symbols; and the synchronization signal further includes a third signal, the third signal is before the first signal, and any level included in the third signal is a second level;
a duration T3 of the third signal satisfies: $T 3 = M * T - T 1 - T 2 ;$ and
a quantity P3 of levels included in the third signal satisfies: $P 3 = M * K * N - P 1 - P 2 ,$ where
K is a quantity of levels included in one OFDM symbol when N is equal to 1, and K is a positive integer.

In a possible design, P2 is equal to 4.

According to a ninth aspect, this application provides a communication apparatus. The communication apparatus may be a network device, or a module or chip in the network device. The communication apparatus includes:
a processing unit, configured to determine a synchronization signal; and
a transceiver unit, configured to send the synchronization signal on a first time domain resource and a first frequency domain resource, where a duration of the first time domain resource is less than or equal to a duration of M orthogonal frequency division multiplexing OFDM symbols, the first frequency domain resource includes N×12 subcarriers, and both M and N are positive integers, where
a modulation scheme of the synchronization signal is on-off keying OOK, the synchronization signal includes a first signal and a second signal, the first signal indicates that the second signal is after and adjacent to the first signal, the second signal is used for time calibration, the sum of a duration T1 of the first signal and a duration of a first level in the second signal is a fixed value, and a quantity P2 of levels included in the second signal is a fixed value.

In a possible design, any level included in the first signal is a first level.

In a possible design, the second signal includes at least one first level and at least one second level, a quantity of first levels included in the second signal is equal to a quantity of second levels, the second level is higher than the first level, and a duration of the second level is equal to a duration of the first level.

In a possible design, a level adjacent to any first level included in the second signal is the second level, a level adjacent to any second level included in the second signal is the first level, and the second level is higher than the first level.

In a possible design, a duration T2 of the second signal is inversely proportional to a value of N.

In a possible design, a duration of one OFDM symbol is T;
the duration T1 of the first signal satisfies: $T 1 = M * T * X - M * T / K * N ;$ and
the duration T2 of the second signal satisfies: $T 2 = M * T * \left(1-X\right) / N ,$
where 0<X<1, and when M=1, a value of X is associated with a subcarrier spacing.

In a possible design, the sum of a quantity P1 of levels included in the first signal and 1 is directly proportional to a value of N.

In a possible design, the quantity P1 of levels included in the first signal satisfies: $P 1 = M * K * N * X - 1 ,$ where $0 < X < 1 ,$ K is a quantity of levels included in one OFDM symbol when N is equal to 1, and K is a positive integer.

In a possible design, when K is equal to 6, the quantity P1 of levels included in the first signal is an integer not less than 2, and the quantity P2 of levels included in the second signal is an integer not less than 2 or an integer not less than 4.

In a possible design, X is 1/3 or 1/2 when M is equal to 1 and K is equal to 6.

In a possible design, the duration of the first time domain resource is equal to the duration of the M OFDM symbols; and the synchronization signal further includes a third signal, the third signal is before the first signal, and any level included in the third signal is a second level;
a duration T3 of the third signal satisfies: $T 3 = M * T - T 1 - T 2 ;$ and
a quantity P3 of levels included in the third signal satisfies: $P 3 = M * K * N - P 1 - P 2 ,$ where
K is a quantity of levels included in one OFDM symbol when N is equal to 1, and K is a positive integer.

In a possible design, P2 is equal to 4.

According to a tenth aspect, this application provides a communication apparatus. The communication apparatus may be a tag, or a module or chip in the tag. The tag may be a passive tag or a semi-passive tag. The communication apparatus includes:
receiving a synchronization signal on a first time domain resource and a first frequency domain resource, where the first time domain resource includes M orthogonal frequency division multiplexing OFDM symbols, the first frequency domain resource includes N*12 subcarriers, and both M and N are positive integers, where
a modulation scheme of the synchronization signal is on-off keying OOK, the synchronization signal includes a first signal and a second signal, the first signal indicates that the second signal is after and adjacent to the first signal, the second signal is used for time calibration; and both a duration T1 of the first signal and a duration T2 of the second signal are fixed values, and the sum of T1 and T2 is equal to a duration of the M OFDM symbols.

In a possible design, any level included in the first signal is a first level.

In a possible design, the second signal includes at least one first level and at least one second level, a quantity of first levels included in the second signal is equal to a quantity of second levels, the second level is higher than the first level, and a duration of the second level is equal to a duration of the first level.

In a possible design, a level adjacent to any first level included in the second signal is the second level, a level adjacent to any second level included in the second signal is the first level, and the second level is higher than the first level.

In a possible design, a duration of one OFDM symbol is T;
the duration T1 of the first signal satisfies: $T 1 = M * T * X ;$ and
the duration T2 of the second signal satisfies: $T 2 = M * T * \left(1-X\right) ,$
where 0<X<1, and when M=1, a value of X is associated with a subcarrier spacing.

In a possible design, a quantity P1 of levels included in the first signal is directly proportional to a value of N, and a quantity P2 of levels included in the second signal is directly proportional to the value of N.

In a possible design, the quantity P1 of levels included in the first signal satisfies: $P 1 = M * K * N * X ;$ and
the quantity P2 of levels included in the second signal satisfies: $P 2 = M * K * N * \left(1-X\right) ,$ where $0 < X < 1 ,$ K is a quantity of levels included in one OFDM symbol when N is equal to 1, and K is a positive integer.

In a possible design, when K is equal to 6, the quantity P1 of levels included in the first signal is an integer not less than 2, and the quantity P2 of levels included in the second signal is an integer not less than 2 or an integer not less than 4.

In a possible design, X is 1/3 or 1/2 when M is equal to 1 and K is equal to 6.

According to an eleventh aspect, this application provides a communication apparatus. The communication apparatus may be a tag, or a module or chip in the tag. The tag may be a passive tag or a semi-passive tag. The communication apparatus includes:
receiving a synchronization signal on a first time domain resource and a first frequency domain resource, where a duration of the first time domain resource is less than or equal to a duration of M orthogonal frequency division multiplexing OFDM symbols, the first frequency domain resource includes N*12 subcarriers, and both M and N are positive integers, where
a modulation scheme of the synchronization signal is on-off keying OOK, the synchronization signal includes a first signal and a second signal, the first signal indicates that the second signal is after and adjacent to the first signal, the second signal is used for time calibration, and both a duration T1 of the first signal and a quantity P2 of levels included in the second signal are fixed values.

In a possible design, any level included in the first signal is a first level.

In a possible design, the second signal includes at least one first level and at least one second level, a quantity of first levels included in the second signal is equal to a quantity of second levels, the second level is higher than the first level, and a duration of the second level is equal to a duration of the first level.

In a possible design, a level adjacent to any first level included in the second signal is the second level, a level adjacent to any second level included in the second signal is the first level, and the second level is higher than the first level.

In a possible design, a duration T2 of the second signal is inversely proportional to a value of N.

In a possible design, a duration of one OFDM symbol is T;
the duration T1 of the first signal satisfies: $T 1 = M * T * X ;$ and
the duration T2 of the second signal satisfies: $T 2 = M * T * \left(1-X\right) / N ,$
where 0<X<1, and when M=1, a value of X is associated with a subcarrier spacing.

In a possible design, a quantity P1 of levels included in the first signal is directly proportional to a value of N.

In a possible design, the quantity P1 of levels included in the first signal satisfies: $P 1 = M * K * N * X ,$ where $0 < X < 1 ,$ K is a quantity of levels included in one OFDM symbol when N is equal to 1, and K is a positive integer.

In a possible design, when K is equal to 6, the quantity P1 of levels included in the first signal is an integer not less than 2, and the quantity P2 of levels included in the second signal is an integer not less than 2 or an integer not less than 4.

In a possible design, X is 1/3 or 1/2 when M is equal to 1 and K is equal to 6.

In a possible design, the duration of the first time domain resource is equal to the duration of the M OFDM symbols; and the synchronization signal further includes a third signal, the third signal is before the first signal, and any level included in the third signal is a second level;
a duration T3 of the third signal satisfies: $T 3 = M * T - T 1 - T 2 ;$ and
a quantity P3 of levels included in the third signal satisfies: $P 3 = M * K * N - P 1 - P 2 ,$ where
K is a quantity of levels included in one OFDM symbol when N is equal to 1, and K is a positive integer.

In a possible design, P2 is equal to 4.

According to a twelfth aspect, this application provides a communication apparatus. The communication apparatus may be a tag, or a module or chip in the tag. The tag may be a passive tag or a semi-passive tag. The communication apparatus includes:
receiving a synchronization signal on a first time domain resource and a first frequency domain resource, where a duration of the first time domain resource is less than or equal to a duration of M orthogonal frequency division multiplexing OFDM symbols, the first frequency domain resource includes N×12 subcarriers, and both M and N are positive integers, where
a modulation scheme of the synchronization signal is on-off keying OOK, the synchronization signal includes a first signal and a second signal, the first signal indicates that the second signal is after and adjacent to the first signal, the second signal is used for time calibration, the sum of a duration T1 of the first signal and a duration of a first level in the second signal is a fixed value, and a quantity P2 of levels included in the second signal is a fixed value.

In a possible design, any level included in the first signal is a first level.

In a possible design, the second signal includes at least one first level and at least one second level, a quantity of first levels included in the second signal is equal to a quantity of second levels, the second level is higher than the first level, and a duration of the second level is equal to a duration of the first level.

In a possible design, a level adjacent to any first level included in the second signal is the second level, a level adjacent to any second level included in the second signal is the first level, and the second level is higher than the first level.

In a possible design, a duration T2 of the second signal is inversely proportional to a value of N.

In a possible design, a duration of one OFDM symbol is T;
the duration T1 of the first signal satisfies: $T 1 = M * T * X - M * T / K * N ;$ and
the duration T2 of the second signal satisfies: $T 2 = M * T * \left(1-X\right) / N ,$
where 0<X<1, and when M=1, a value of X is associated with a subcarrier spacing.

In a possible design, the sum of a quantity P1 of levels included in the first signal and 1 is directly proportional to a value of N.

In a possible design, the quantity P1 of levels included in the first signal satisfies: $P 1 = M * K * N * X - 1 ,$ where $0 < X < 1 ,$ K is a quantity of levels included in one OFDM symbol when N is equal to 1, and K is a positive integer.

In a possible design, when K is equal to 6, the quantity P1 of levels included in the first signal is an integer not less than 2, and the quantity P2 of levels included in the second signal is an integer not less than 2 or an integer not less than 4.

In a possible design, X is 1/3 or 1/2 when M is equal to 1 and K is equal to 6.

In a possible design, the duration of the first time domain resource is equal to the duration of the M OFDM symbols; and the synchronization signal further includes a third signal, the third signal is before the first signal, and any level included in the third signal is a second level;
a duration T3 of the third signal satisfies: $T 3 = M * T - T 1 - T 2 ;$ and
a quantity P3 of levels included in the third signal satisfies: $P 3 = M * K * N - P 1 - P 2 ,$ where
K is a quantity of levels included in one OFDM symbol when N is equal to 1, and K is a positive integer.

In a possible design, P2 is equal to 4.

According to a thirteenth aspect, this application provides a communication apparatus. The communication apparatus includes a processor, and the processor is configured to execute a computer program, to cause the communication apparatus to perform the method according to any design of any one of the first aspect to the sixth aspect.

In a possible design, the communication apparatus may be a chip implementing the method according to any one of the first aspect to the sixth aspect, or a device including the chip.

In a possible design, the communication apparatus further includes a transceiver. The processor is coupled to the transceiver.

In a possible design, the communication apparatus further includes a memory. The processor is coupled to the memory, the memory stores a computer program, and the processor is further configured to invoke the computer program in the memory. For example, the processor and the memory may alternatively be integrated together.

According to a fourteenth aspect, this application provides a communication apparatus. The communication apparatus includes a processor, and the processor is configured to implement the method according to any design of any one of the first aspect to the sixth aspect by using a logic circuit or executing code instructions.

Optionally, the communication apparatus further includes an interface circuit. The interface circuit is configured to: receive a signal from a communication apparatus other than the communication apparatus and transmit the signal to the processor, or send a signal from the processor to the communication apparatus other than the communication apparatus.

According to a fifteenth aspect, this application provides a computer-readable storage medium. The storage medium stores a computer program or instructions. When the computer program or the instructions are executed by a computer, the method according to any design of any one of the first aspect to the sixth aspect is implemented.

According to a sixteenth aspect, this application provides a computer program product. When a computer reads and executes the computer program product, the computer is enabled to perform the method according to any design of any one of the first aspect to the sixth aspect.

According to a seventeenth aspect, this application provides a communication system. The communication system includes a communication apparatus configured to implement the method according to any one of the first aspect, the second aspect, or the third aspect, and includes a communication apparatus configured to implement the method according to any one of the fourth aspect, the fifth aspect, or the sixth aspect.

According to an eighteenth aspect, this application further provides a communication method, where a network device is configured to perform the method according to any design of the first aspect, and a tag is configured to perform the method according to any design of the second aspect.

For beneficial effects of the fourth aspect to the eighteenth aspect, refer to the beneficial effects of the first aspect to the third aspect. Details are not described herein again.

### BRIEF DESCRIPTION OF DRAWINGS

FIG. 1 is a diagram of an architecture of a communication system to which this application is applicable;
FIG. 2 is a diagram of a data-0 signal;
FIG. 3 is a diagram of a basic structure of a synchronization signal;
FIG. 4 is a schematic flowchart of a communication method according to an embodiment of this application;
FIG. 5 is a diagram of a structure of a synchronization signal according to an embodiment of this application;
FIG. 6 is a schematic flowchart of signal processing through DFT-s-OFDM;
FIG. 7 is a diagram of a structure of a synchronization signal according to an embodiment of this application;
FIG. 8 is a diagram of a structure of a synchronization signal according to an embodiment of this application;
FIG. 9 is a diagram of a structure of a synchronization signal according to an embodiment of this application;
FIG. 10 is a diagram of a structure of a synchronization signal according to an embodiment of this application;
FIG. 11 is a diagram of a structure of a possible communication apparatus according to an embodiment of this application; and
FIG. 12 is a diagram of a structure of another possible communication apparatus according to an embodiment of this application.

### DESCRIPTION OF EMBODIMENTS

The following further describes specific embodiments of this application in detail with reference to accompanying drawings.

Terms "first", "second", and the like in the specification, claims, and accompanying drawings of this application are used to distinguish between different objects, and are not used to describe a specific sequence. In addition, the terms "including", "having", and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a particular feature, structure, or characteristic described with reference to embodiments may be included in at least one embodiment of this application. The phrase appearing at various locations in this specification may neither necessarily mean a same embodiment, nor mean an independent or optional embodiment exclusive from another embodiment. It is explicitly and implicitly understood by persons skilled in the art that embodiments described in this specification may be combined with another embodiment.

In this application, "at least one (item)" means one or more, "a plurality of" means two or more, "at least two (items)" means two, three, or more, and "and/or" is used to describe an association relationship between associated objects and indicates that three relationships may exist. For example, "A and/or B" may indicate the following three cases: Only A exists, only B exists, and both A and B exist, where A and B may be singular or plural. The character "/" usually indicates an "or" relationship between the associated objects. "At least one of the following items (pieces)" or a similar expression thereof indicates any combination of the items, including one of the items (pieces) or any combination of a plurality of the items (pieces). For example, at least one of a, b, or c may indicate a, b, c, a and b, a and c, b and c, or a, b, and c, where a, b, and c may be singular or plural.

In this application, "sending information to... (for example, a terminal)" may be understood as that a destination end of the information is the terminal, and may include directly or indirectly sending the information to the terminal. "Receiving information from... (for example, a terminal)" or "receiving information that is from... (for example, a terminal)" may be understood as that a source end of the information is the terminal, and may include directly or indirectly receiving the information from the terminal. Necessary processing, such as a format change, may be performed on the information between the source end and the destination end for information sending. However, the destination end can understand valid information from the source end. A similar expression in this application may be understood similarly. Details are not described herein again.

The following explains some terms or concepts in embodiments of this application, to facilitate understanding by persons skilled in the art.

The passive IoT is a transmission network that includes a passive (battery free) node. The passive node is not equipped with or does not rely on a power supply device such as a battery, but obtains energy from an environment to support the passive node in performing sensing, transmission, and distributed computing on data. Generally, the passive node may include a passive tag (passive tag) or a semi-passive tag (semi-passive tag), and a transceiver of the passive tag may be excited by a radio frequency field. In embodiments of this application, for brevity of description, the passive tag or the semi-passive tag may be alternatively described as a tag. The tag can form a radio frequency identification (radio frequency identification, RFID) system together with a network device, and a contactless automatic identification radio frequency technology can be applied to the RFID system.

An RFID technology is an automatic identification technology that performs contactless bidirectional communication through induction, radio wave, or microwave for the purpose of identification and data exchange. This technology can be used to manage a physical object in which a tag is located.

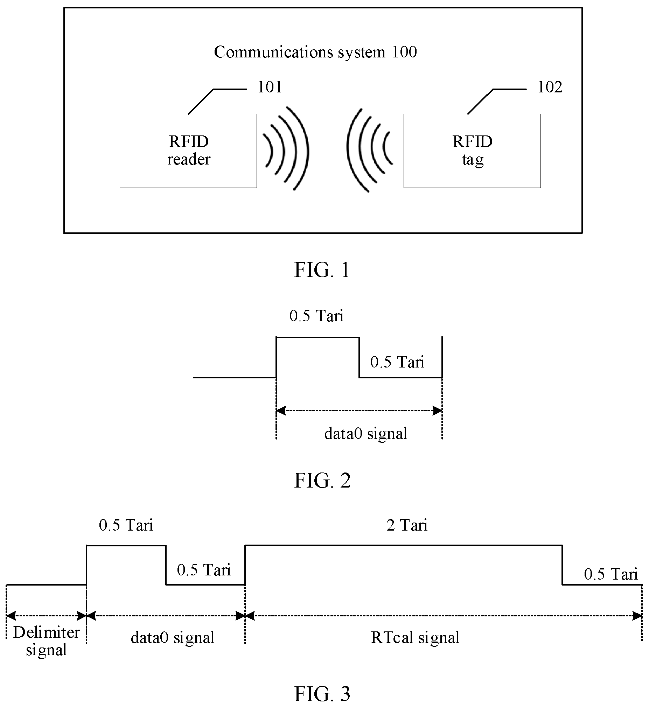

FIG. 1 is a diagram of an architecture of a communication system to which this application is applicable. The communication system 100 includes an RFID reader (also referred to as a reader, a card reader, or the like, which is briefly referred to as a reader below) 101 and an RFID tag (briefly referred to as a tag below) 102, where the reader 101 and the tag 102 may communicate with each other through a radio frequency (radio frequency, RF) signal.

The reader 101 may transmit a query RF signal, and the tag 102 located near the reader 101 may detect the query RF signal sent by the reader 101, and return a response RF signal to the reader 101, where the response RF signal may carry related information of the tag 102.

The reader 101 may detect and parse the response RF signal.

In this embodiment of this application, the reader 101 may be understood as an entity configured to transmit or receive a signal on a network side, or may be understood as a device that communicates with the tag, for example, may be a terminal device, an access network device (for example, a base station), or a device having a read/write function. For ease of description, descriptions are provided in the following specific embodiments mainly by using a network device as an example.

The tag 102 in this embodiment of this application may be a passive tag or a semi-passive tag. If the tag 102 is a passive tag, that is, the tag 102 does not have a power supply, the tag 102 may obtain energy from the query RF signal. Generally, a passive/semi-passive tag may also be referred to as a passive/semi-passive internet of things (internet of things, IOT) device, and may be considered as a terminal, for example, a passive terminal device, a passive A-IoT terminal device, a semi-passive terminal device, a semi-passive A-IoT terminal device, or a terminal device having a backscattering (carrier) capability.

The passive tag (passive tag) does not include a battery and has no built-in battery. When being outside a reading range of the reader, an electronic tag is in a passive state. When being within the reading range of the reader, the electronic tag extracts a power supply required for operation of the electronic tag from radio frequency energy sent by the reader. All passive electronic tags transmit electronic tag information to the reader usually by using a reflective modulation scheme. A utility range of the passive tag is approximately from 10 centimeters to several meters. The passive tag has a light weight, a small size, and a long service life, but has a limited transmission distance, and requires high transmit power of the reader and low power consumption of a transponder operating circuit.

A battery in the semi-passive tag (semi-passive tag) supplies power only to a circuit that requires power supply to maintain data in the tag or provides auxiliary support for a voltage required for operation of a tag chip, and supplies power to a tag circuit that consumes very little power. Before the tag enters an operating state, the tag is always in a sleep state, which is equivalent to a passive tag. A battery inside the tag consumes very little energy. Therefore, the battery can remain effective for several years or even up to 10 years. When the tag enters a reading area of the reader, the tag is excited by a radio frequency signal sent by the reader. When the tag enters an operating state, energy for information exchange between the tag and the reader can be mainly radio frequency energy supplied by the reader (reflective modulation scheme). The battery inside the tag is mainly used to compensate for insufficient radio frequency field strength at a location at which the tag is located. The energy of the battery inside the tag is not converted into the radio frequency energy.

It may be understood that the tag may also have other classification manners: active, passive, and semi-active based on different modulation schemes. A read-only tag and a read-write tag may be obtained through classification based on whether stored information is rewritten. A credit card tag, a linear tag, a paper tag, a glass tube tag, a circular tag, an odd-form tag for a special purpose, and the like may be obtained through classification based on different encapsulation forms.

It should be understood that FIG. 1 shows an example of one reader 101 and one tag 102. In the architecture in FIG. 1, one reader 101 may communicate with a plurality of tags 102, and the communication system 100 may include a plurality of readers 101. This is not limited in this embodiment of this application.

Currently, the basic structure of a synchronization signal sent by the reader to the tag in RFID consists of a delimiter, a data-0 signal, and an RTcal signal.

Delimiter signal: The delimiter signal serves as a separator. Before the delimiter, the tag receives a continuous high-level signal. The delimiter signal is a low level that lasts for a period of time. In this case, when the tag detects this low-level duration, it identifies that a time calibration signal will subsequently arrive and gradually starts to receive subsequent signals in the delimiter receiving phase.

Data-0 signal: The data-0 signal is a signal obtained after PIE is performed on bit 0. Its structure includes a high level and a low level. The total duration is 1 Tari, with the high level and the low level each occupying 0.5 Tari, as shown in FIG. 2. When the tag detects data-0, it determines a duration of the high level and a duration of the low level in data-0 based on the rising edge or the falling edge between levels.

RTcal signal: The total duration of the RTcal signal is the sum of the duration of the data-0 signal and the duration of the data-1 signal (a signal obtained after PIE is performed on bit 1). The total duration range is 2.5 Tari≤RTcal≤3.0 Tari. By subtracting the duration of the data-0 signal from the total duration of the RTcal signal, the duration of the data-1 signal is 1.5 Tari≤Duration of the data-1 signal≤2.0 Tari. The structure of the data-1 signal includes a high level and a low level, where the low level still occupies 0.5 Tari. Consequently, the high level in data-1 occupies 1 Tari≤Duration of the high level included in the data-1 signal≤1.5 Tari, which is 2 to 3 times the duration of the high level in data-0. For example, if the high level in data-1 occupies 1.5 Tari, a high-level signal of duration 0.5 Tari is quantized into a digital signal symbol {1}, and a low-level signal of duration 0.5 Tari is quantized into a digital signal symbol {0}, then a digital signal corresponding to data-0 may be represented as {10} and a digital signal corresponding to data-1 may be represented as {1110}. That is, it may also be understood that the symbol {10} is obtained after PIE is performed on bit 0, and the symbol {1110} is obtained after PIE is performed on bit 1. After detecting the RTcal signal, the tag may detect the duration of the high level and the duration of the low level in data-1 (the information has been obtained when the data-0 signal is detected) based on the rising edge or the falling edge between levels. FIG. 3 is a diagram of the basic structure of the synchronization signal.

Through the data-0 signal and the RTcal signal, the tag effectively obtains the level durations of data-0 and data-1. By detecting the rising and falling edges, the tag obtains clock boundary (symbol boundary) information of the signal, which is equivalent to a time calibration process. Therefore, the data-0 signal and the RTcal signal may also regarded as time calibration signals for passive tags.

It can be learned from the foregoing description that, existing tags (passive or semi-passive tags) mainly use PIE, where encoding patterns corresponding to bit 0 and bit 1 have different lengths of high levels, which typically accounts for ≥50% of the total level duration in the entire encoding pattern. Encoding with unequal high levels, such as PIE, enables the tag to receive more RF energy during data transmission, thereby better maintaining tag communication. However, in practical implementations, as tag circuits usually include energy storage capacitors that store energy to support subsequent communication for a period of time, the encoding scheme such as PIE that enables the tag to receive more high-level energy is no longer necessary. In addition, for PIE described above, the bit pattern obtained after bit 0 is encoded is {10}, and the bit pattern obtained after bit 1 is encoded is {1110}. The bit patterns obtained after bit 0 and bit 1 are encoded are highly similar, resulting in a very small average code distance between codewords. During demodulation at the receive end, the probability of incorrect decisions is definitely higher when compared with an encoding type such as Manchester encoding (the bit pattern obtained after bit 0 is encoded is {10}, and the bit pattern obtained after bit 1 is encoded is {01}). In Manchester encoding, the bit patterns of codewords are completely opposite, and the average code distance is a maximum value. Therefore, during demodulation at the receive end, the performance of Manchester encoding is definitely better than that of PIE. Moreover, in Manchester encoding, the duration of the high level of accounts for 50% of the total level duration, which better meets the RF energy requirements of the tag. In addition, the current synchronization signal is designed considering only a downlink signal bandwidth of 12 subcarriers. If a configured downlink signal bandwidth is greater than 12 subcarriers (for example, 24 or 48 subcarriers), the current design will be incompatible with a wider downlink signal bandwidth.

Based on this, this application provides a communication method and a related apparatus, which are compatible with design of a synchronization signal of a passive/semi-passive tag in different downlink signal bandwidths, thereby helping improve communication performance. In addition, the synchronization signal in embodiments of this application uses a Manchester encoding scheme with better performance, which helps improve demodulation performance of the receive end.

The following describes in detail communication methods and communication apparatuses provided in this application.

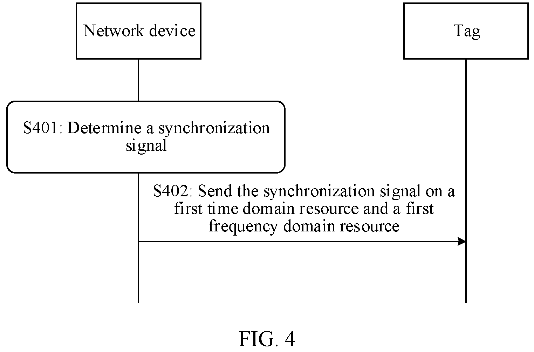

FIG. 4 is a schematic flowchart of a communication method according to an embodiment of this application. As shown in FIG. 4, the communication method includes the following steps S401 and S402. The method shown in FIG. 4 may be performed by a network device and a tag (that is, a passive tag or a semi-passive tag, which is briefly referred to as a tag below. It should be noted that the tag in embodiments of this application may be understood as a terminal). Alternatively, the method shown in FIG. 4 may be performed by a chip in the network device and a chip in the tag. For ease of description, descriptions are provided in FIG. 4 mainly by using an example in which the method is performed by the network device and the tag. It should be noted that FIG. 4 is a schematic flowchart of a method embodiment of this application, and shows detailed communication steps or operations of the method. However, these steps or operations are merely examples. Other operations or variants of various operations in FIG. 4 may be further performed in embodiments of this application. In addition, the steps in FIG. 4 may be separately performed in a sequence different from that shown in FIG. 4, and possibly, not all operations in FIG. 4 need to be performed.

S401: The network device determines a synchronization signal.

The synchronization signal may also be referred to as a synchronization signal of the passive tag, a preamble signal, a preamble signal of a data signal, a preamble signal of the passive tag, a preamble signal of a passive tag data signal, or the like. These names are merely examples, or may be other names in a specific implementation. This is not specifically limited in this application.

S402: The network device sends the synchronization signal to the tag on a first time domain resource and a first frequency domain resource; and correspondingly, the tag receives the synchronization signal from the network device on the first time domain resource and the first frequency domain resource.

Herein, a duration of the first time domain resource is less than or equal to a duration of M orthogonal frequency division multiplexing (orthogonal frequency division multiplexing, OFDM) symbols. Preferably, a value of M is equal to 1. The first frequency domain resource includes N*12 subcarriers, or is described as that the first frequency domain resource includes N resource blocks (resource block, RB). Both M and N are positive integers. Preferably, M is fixed to 1.

It should be understood that a modulation scheme of the synchronization signal in this embodiment of this application may be on-off keying (on-off keying, OOK) or binary amplitude shift keying (binary amplitude shift keying, 2ASK). Therefore, all descriptions of "OOK" in this specification may be replaced with "2ASK". For ease of understanding, descriptions are provided below mainly by using the expression of "OOK". The synchronization signal includes a first signal and a second signal. Herein, the first signal indicates that the second signal is after and adjacent to the first signal (that is, if the first signal exists, it means that the second signal is transmitted immediately after transmission of the first signal ends. Herein, "immediately" indicates that there is no time gap (gap) between the first signal and the second signal). In other words, the first signal indicates that the second signal is transmitted after the first signal, or it can be understood as that the first signal is a signal between an energy signal and the second signal. The second signal is used for time calibration. Herein, "time calibration" has two functions: "determining a duration of a unit level/one level" and "determining a time boundary of a data signal". Generally, a data signal is transmitted immediately after transmission of the second signal ends. It should be noted that the first signal may also be referred to as a delimiter (delimiter) signal, a delimiter, a passive tag delimiter, or the like, and the second signal may also be referred to as a time calibration signal, a calibration signal, a symbol synchronization signal, a level calibration signal, or the like. This is not limited in this application. Optionally, the first signal may also be a part of the delimiter signal. The level in this application is sometimes also referred to as an OOK chip (chip), an OOK symbol (symbol), an OOK segment (segment), or the like. This is not specifically limited in this embodiment of this application.

It should be noted that, for design of the first signal and the second signal in the synchronization signal, this application mainly provides three possible implementations. The following separately describes the three possible implementations.

### Manner 1:

In Manner 1, in one design, the synchronization signal includes the first signal and the second signal. The first time domain resource for transmitting the synchronization signal includes the M OFDM symbols (or described as the duration of the first time domain resource being equal to the duration of the M OFDM symbols). In other words, the sum of a duration of the first signal and a duration of the second signal is equal to the duration of the M OFDM symbols.

For example, any level included in the first signal may be a first level, meaning the first signal is an all-{0} (or all-low-level) signal. Optionally, the first signal may follow a predefined/preset pattern. For example, the first signal may be a signal in a combined pattern of {01} and {10}. This is not limited in this application. It should be understood that, when the first signal is an all-low-level signal, this design effectively prevents confusion between the first signal and the subsequent second signal or data signal, thereby improving demodulation performance. Therefore, the following descriptions are mainly based on the example in which the first signal is an all-low-level signal.

The second signal includes at least one first level and at least one second level, where a quantity of first levels included in the second signal is equal to a quantity of second levels. In other words, the second signal includes equal quantities of {0}s and {1}s (or equal quantities of low levels and high levels). The second level is higher than the first level. The second level may also be referred to as a high level, an OOK symbol {1}, or an OOK chip {1}. The first level may also be referred to as a low level, an OOK symbol {0}, or an OOK chip {0}, or the like. This is not specifically limited in this embodiment of this application.

For example, the second signal may follow a predefined/preset pattern, such as a combined pattern of {01} and {10}, for example, {01100110} or {01011010}. For another example, the second signal may also follow another pattern that satisfies the requirement of the quantity of first levels being equal to the quantity of second levels. For example, the second signal is {01101010} or {10010101}. This is not limited in this application.

For example, the second signal may be one of signals in a plurality of predefined/preset patterns, where different preset patterns may indicate different subcarrier spacings or CP lengths of a data signal. For example, the second signal may be one of two predefined patterns. For example, if the two predefined patterns are {01100110} and {10011001}, then the preset pattern {01100110} of the second signal may indicate that the subcarrier spacing of the data signal is 15 kHz, and the preset pattern {10011001} of the second signal may indicate that the subcarrier spacing of the data signal is 30 kHz. Alternatively, the preset pattern {01100110} of the second signal may indicate that the CP length of the data signal is a CP length corresponding to the subcarrier spacing 15 kHz, and the preset pattern {10011001} of the second signal may indicate that the CP length of the data signal is a CP length corresponding to the subcarrier spacing 30 kHz.

It should be understood that, in addition to the quantity of first levels included in the second signal in this application being equal to the quantity of second levels, the second signal may further satisfy the following: A level adjacent to any first level included in the second signal may be the second level, and a level adjacent to any second level included in the second signal may be the first level. For example, in a case, the 1^{st} level in the second signal is the first level, and the last level in the second signal is the second level, resulting in an alternating {0} and {1} pattern, such as {010101}. For another example, in another case, the 1^{st} level in the second signal is the second level, and the last level in the second signal is the first level, resulting in an alternating {1} and {0} pattern, such as {101010}. Preferably, the second signal is a signal that uses the alternating {1} and {0} pattern.

For example, the second signal may be a signal that uses the alternating {0} and {1}pattern or a signal that uses the alternating {1} and {0} pattern, such as {010101} or {101010}. Different forms of the second signal may indicate different subcarrier spacings or different CP lengths of the data signal. For example, the preset pattern {010101} of the second signal may indicate that the subcarrier spacing of the data signal is 15 kHz, and the preset pattern {101010} of the second signal may indicate that the subcarrier spacing of the data signal is 30 kHz. Alternatively, the preset pattern {010101} of the second signal may indicate that the CP length of the data signal is a CP length corresponding to the subcarrier spacing 15 kHz, and the preset pattern {101010} of the second signal may indicate that the CP length of the data signal is a CP length corresponding to the subcarrier spacing 30 kHz.

It should be noted that, in this application, the duration of the second level is equal to the duration of the first level.

Optionally, both the duration T1 of the first signal and the duration T2 of the second signal are fixed values that do not change with the value of N, and the sum of the duration T1 of the first signal and the duration T2 of the second signal is equal to the duration of the M OFDM symbols, that is, T1+T2=M*T. Herein, T represents the duration of one OFDM symbol, orthe duration of one OFDM symbol before a cyclic prefix (cyclic prefix, CP) is added. Generally, the duration of one OFDM symbol is the reciprocal of the subcarrier spacing. For example, when the subcarrier spacing is 15 kHz, the duration of one OFDM symbol is 1/15 kHz=66.6 µs. For another example, when the subcarrier spacing is 30 kHz, the duration of one OFDM symbol is 1/30 kHz=33.3 µs.

Optionally, the duration T1 of the first signal may satisfy the formula T1=M*T*X, and the duration T2 of the second signal may satisfy the formula T2=M*T*(1-X), where 0<X<1. It should be understood that, when M=1, a value of X is associated with a subcarrier spacing. For example, when M is equal to 1 and K is equal to 6, if the subcarrier spacing is 15 kHz, X=1/3, because the duration of the first signal needs to be not shorter than a specified duration of a passive tag delimiter (for example, the duration of the delimiter is not less than 12.5 µs). When M is equal to 1 and K is equal to 6, if the subcarrier spacing is 30 kHz, X=1/2, because the duration of the first signal needs to be not shorter than a duration of a passive tag delimiter (for example, the duration of the delimiter is not less than 12.5 µs). Herein, when N is equal to 1, K is a quantity of levels included in one OFDM symbol (that is, when the first frequency domain resource includes 12 subcarriers, K is a quantity of levels included in one OFDM symbol). When N is greater than 1, a quantity of levels included in one OFDM symbol is K*N. It should be noted that when M is equal to 1, K is equal to 6, and the subcarrier spacing is 15 kHz, X=1/3 is a preferred solution, and X=1/2 is a second preferred solution. When M is equal to 1, K is equal to 6, and the subcarrier spacing is 30 kHz, X=1/2 is a preferred solution. For ease of description, for Manner 1, descriptions are provided below mainly by using an example in which X=1/3 when M is equal to 1, K is equal to 6, and the subcarrier spacing is 15 kHz.

Optionally, a quantity P1 of levels included in the first signal is directly proportional to a value of N, and a quantity P2 of levels included in the second signal is directly proportional to the value of N. For example, the quantity P1 of levels included in the first signal may satisfy the formula P1=M*K*N*X, and the quantity P2 of levels included in the second signal may satisfy the formula P2=M*K*N*(1-X). Herein, 0<X<1, and when N is equal to 1, K is a quantity of levels included in one OFDM symbol (that is, when the first frequency domain resource includes 12 subcarriers, K is a quantity of levels included in one OFDM symbol). When N is greater than 1, a quantity of levels included in one OFDM symbol is K*N, where K is usually a positive integer. Generally, when a value of M is equal to 1 and X is a fixed value, a ratio of the quantity P1 of levels included in the first signal to N is K, and a ratio of the quantity P1 of levels included in the second signal to N is K.

Optionally, when K is equal to 6 and M is equal to 1, a total quantity of levels included in the synchronization signal in Manner 1 is 6*N.

Optionally, when K is equal to 6, the quantity P1 of levels included in the first signal is usually an integer not less than 2 (that is, P1≥2, and P is an integer), and the quantity P2 of levels included in the second signal is usually an integer not less than 2 (that is, P2≥2, and P is an integer), or the quantity P2 of levels included in the second signal is an integer not less than 4 (that is, P2≥4, and P is an integer). Preferably, the quantity P2 of levels included in the second signal is greater than or equal to 4, because when P2 is not less than 4, a quantity of rising edges or falling edges of levels that can be used when the tag performs clock calibration can be effectively ensured, and a small detection error of detecting a level boundary (symbol boundary) is ensured.

For ease of understanding, descriptions are provided below mainly by using an example in which M=1, K=6, and X=1/3. When the first time domain resource includes one OFDM symbol (that is, a duration of the synchronization signal is one OFDM symbol), the duration of the first signal is 1/3 of a duration of one OFDM symbol, and the quantity of levels included in the first signal is 6*N*1/3; and the duration of the second signal is 2/3 of the duration of the one OFDM symbol, and the quantity of levels included in the second signal is 6*N*2/3.

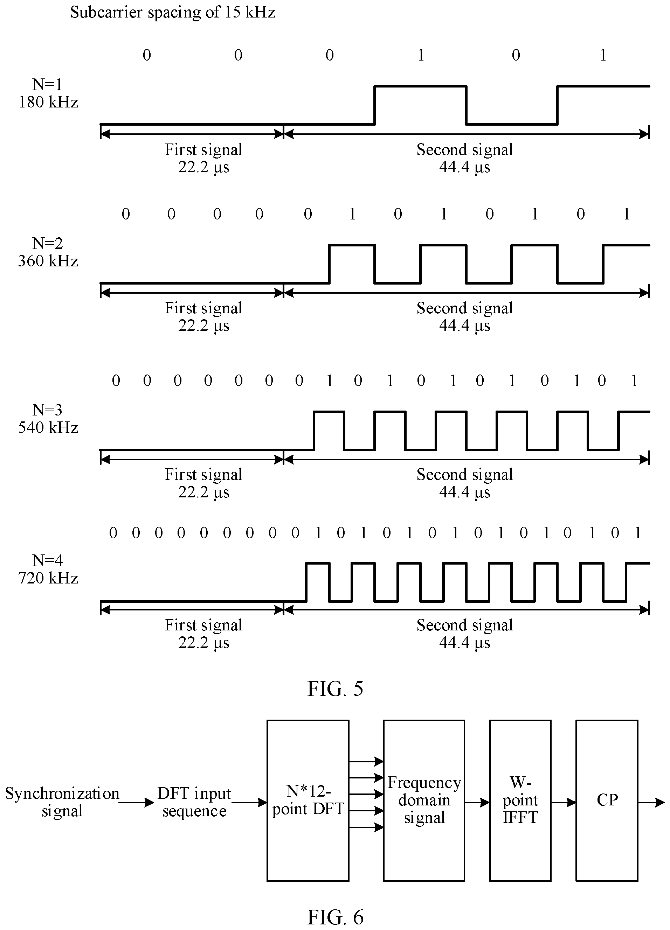

For example, FIG. 5 is a diagram of a structure of a synchronization signal according to an embodiment of this application. As shown in FIG. 5, for example, a subcarrier spacing is equal to 15 kHz. When a duration of the synchronization signal is one OFDM symbol (that is, M=1, which is equivalent to the duration of the synchronization signal being equal to 66.6 µs), K=6, and X=1/3, if the first signal is an all-{0} signal, and the second signal is a signal that uses the alternating {0} and {1} pattern, details are as follows:

When N is equal to 1, a quantity of levels included in the first signal is 2 (that is, the first signal is {00}), and a quantity of levels included in the second signal is 4 (that is, the second signal is {0101}). When the subcarrier spacing is equal to 15 kHz, before a CP is added, a duration T1 of the first signal is 22.2 µs, and a duration T2 of the second signal is 44.4 µs.

When N is equal to 2, a quantity of levels included in the first signal is 4 (that is, the first signal is {0000}), and a quantity of levels included in the second signal is 8 (that is, the second signal is {01010101}). When the subcarrier spacing is equal to 15 kHz, before a CP is added, a duration T1 of the first signal is 22.2 µs, and a duration T2 of the second signal is 44.4 µs.

When N is equal to 3, a quantity of levels included in the first signal is 6 (that is, the first signal is {000000}), and a quantity of levels included in the second signal is 12 (that is, the second signal is {010101010101}). When the subcarrier spacing is equal to 15 kHz, before a CP is added, a duration T1 of the first signal is 22.2 µs, and a duration T2 of the second signal is 44.4 µs.

When N is equal to 4, a level included in the first signal is 8 (that is, the first signal is {00000000}), and a quantity of levels included in the second signal is 16 (that is, the second signal is {0101010101010101}). When the subcarrier spacing is equal to 15 kHz, before a CP is added, a duration T1 of the first signal is 22.2 µs, and a duration T2 of the second signal is 44.4 µs.

It can be learned from FIG. 5 that when the subcarrier spacing is equal to 15 kHz, before the CP is added, the duration of the first signal is T1=1/3*66.6 µs, that is, 22.2 µs, and the duration of the second signal is T2=2/3*66.6 µs, that is, 44.4 µs. The quantity of levels included in the first signal is 6*N*1/3, and the quantity of levels included in the second signal is 6*N*2/3.

Optionally, in this application, a network device may specifically process the synchronization signal in a discrete Fourier transform-spreading-orthogonal frequency division multiplexing (discrete Fourier transform-spreading-orthogonal frequency division multiplexing, DFT-s-OFDM) generation manner shown in FIG. 6, and then send a processed synchronization signal. A length of a discrete Fourier transform (discrete Fourier transform, DFT) input sequence is N*12, and a pattern of the DFT input sequence is a level pattern formed when a quantity of repetitions of each level in all levels included in the first signal and the second signal is equal to 12/K. For example, when K is equal to 6, the quantity of repetitions is equal to 2. For example, if the duration of the synchronization signal is one OFDM symbol (that is, M=1), when N is equal to 1, the levels included in the first signal are {00}, and the levels included in the second signal are {0101}. Each level in the first signal and the second signal is repeated once (that is, a quantity of repetitions of each level is equal to 2), so that levels {0000} and {00110011} can be obtained. In this case, a level pattern is {000000110011}, that is, the DFT input sequence is {000000110011}.

Based on the design in Manner 1, performance of a synchronization signal in a passive IoT system can be effectively ensured. The duration of the first signal in different bandwidths remains unchanged, and is not shorter than a specified duration of a passive tag delimiter (for example, the duration of the delimiter is not less than 12.5 µs) (that is, the first signal is equivalent to a delimiter (delimiter) signal), which can effectively ensure buffer time for data receiving when the tag is started. The quantity of levels included in the second signal is greater than or equal to 4 (preferably), which can effectively ensure a quantity of levels that can be used when the tag performs clock calibration, and help improve accuracy of obtaining a level boundary (a symbol boundary) during detection.

### Manner 2:

In Manner 2, in one design, the synchronization signal includes the first signal and the second signal. The duration of the first time domain resource for transmitting the synchronization signal is less than or equal to the duration of the M OFDM symbols. In other words, the sum of a duration of the first signal and a duration of the second signal is equal to the duration of the M OFDM symbols.

For example, any level included in the first signal may be a first level, meaning the first signal is an all-{0} (or all-low-level) signal. Optionally, the first signal may follow a predefined/preset pattern. For example, the first signal may be a signal in a combined pattern of {01} and {10}. This is not limited in this application. It should be understood that, when the first signal is an all-low-level signal, this design effectively prevents confusion between the first signal and the subsequent second signal or data signal, thereby improving demodulation performance. Therefore, the following descriptions are mainly based on the example in which the first signal is an all-low-level signal.

The second signal includes at least one first level and at least one second level, where a quantity of first levels included in the second signal is equal to a quantity of second levels. In other words, the second signal includes equal quantities of {0}s and {1}s (or equal quantities of low levels and high levels). The second level is higher than the first level. The second level may also be referred to as a high level, an OOK symbol {1}, or an OOK chip {1}. The first level may also be referred to as a low level, an OOK symbol {0}, or an OOK chip {0}, or the like. This is not specifically limited in this embodiment of this application.

For example, the second signal may follow a predefined/preset pattern, such as a combined pattern of {01} and {10}, for example, {0110} or {1001}. For another example, the second signal may also follow another pattern that satisfies the requirement of the quantity of first levels being equal to the quantity of second levels. This is not limited in this application.

For example, the second signal may be one of signals in a plurality of predefined/preset patterns, where different preset patterns may indicate different subcarrier spacings or CP lengths of a data signal. For example, the second signal may be one of two predefined patterns. For example, if the two predefined patterns are {0110} and {1001}, then the preset pattern {0110} of the second signal may indicate that the subcarrier spacing of the data signal is 15 kHz, and the preset pattern {1001} of the second signal may indicate that the subcarrier spacing of the data signal is 30 kHz. Alternatively, the preset pattern {0110} of the second signal may indicate that the CP length of the data signal is a CP length corresponding to the subcarrier spacing 15 kHz, and the preset pattern {1001} of the second signal may indicate that the CP length of the data signal is a CP length corresponding to the subcarrier spacing 30 kHz.

It should be understood that, in addition to the quantity of first levels included in the second signal in this application being equal to the quantity of second levels, a level adjacent to any first level included in the second signal may be the second level, and a level adjacent to any second level included in the second signal may be the first level. For example, in a case, the 1^{st} level in the second signal is the first level, and the last level in the second signal is the second level, resulting in an alternating {0} and {1} pattern, such as {0101}. For another example, in another case, the 1^{st} level in the second signal is the second level, and the last level in the second signal is the first level, resulting in an alternating {1} and {0} pattern, such as {1010}. Preferably, the second signal is a signal that uses the alternating {1} and {0} pattern.

For example, the second signal may be a signal that uses the alternating {0} and {1} pattern or a signal that uses the alternating {1} and {0} pattern, such as {0101} or {1010}. Different forms of the second signal may indicate different subcarrier spacings or different CP lengths of the data signal. For example, the preset pattern {0101} of the second signal may indicate that the subcarrier spacing of the data signal is 15 kHz, and the preset pattern {1010} of the second signal may indicate that the subcarrier spacing of the data signal is 30 kHz. Alternatively, the preset pattern {0101} of the second signal may indicate that the CP length of the data signal is a CP length corresponding to the subcarrier spacing 15 kHz, and the preset pattern {1010} of the second signal may indicate that the CP length of the data signal is a CP length corresponding to the subcarrier spacing 30 kHz.

It should be noted that, in this application, the duration of the second level is equal to the duration of the first level.

Optionally, the duration T1 of the first signal is a fixed value that does not change with the value of N. Optionally, the duration T2 of the second signal is inversely proportional to a value of N.

For example, the duration T1 of the first signal may satisfy the formula T1=M*T*X, and the duration T2 of the second signal may satisfy the formula T2=M*T*(1-X)/N. Herein, T represents a duration of one OFDM symbol, or represents a duration of one OFDM symbol on which a CP is not added. Generally, a duration of one OFDM symbol is a reciprocal of a subcarrier spacing. For example, when the subcarrier spacing is equal to 15 kHz, a duration of one OFDM symbol is 1/15 kHz=66.6 µs. For another example, when the subcarrier spacing is equal to 30 kHz, a duration of one OFDM symbol is 1/30 kHz=33.3 µs.

It should be noted that X needs to satisfy the formula 0<X<1. It should be understood that, when M=1, a value of X is associated with a subcarrier spacing. For example, when M is equal to 1 and K is equal to 6, if the subcarrier spacing is 15 kHz, X=1/3, because the duration of the first signal needs to be not shorter than a specified duration of a passive tag delimiter (for example, the duration of the delimiter is not less than 12.5 µs). When M is equal to 1 and K is equal to 6, if the subcarrier spacing is 30 kHz, X=1/2, because the duration of the first signal needs to be not shorter than a duration of a passive tag delimiter (for example, the duration of the delimiter is not less than 12.5 µs). Herein, when N is equal to 1, K is a quantity of levels included in one OFDM symbol (that is, when the first frequency domain resource includes 12 subcarriers, K is a quantity of levels included in one OFDM symbol). When N is greater than 1, a quantity of levels included in one OFDM symbol is K*N. It should be noted that when M is equal to 1, K is equal to 6, and the subcarrier spacing is 15 kHz, X=1/3 is a preferred solution, and X=1/2 is a second preferred solution. When M is equal to 1, K is equal to 6, and the subcarrier spacing is 30 kHz, X=1/2 is a preferred solution. For ease of description, for Manner 2, descriptions are provided below mainly by using an example in which X=1/3 when M is equal to 1, K is equal to 6, and the subcarrier spacing is 15 kHz.

Optionally, a quantity P1 of levels included in the first signal is directly proportional to a value of N. A quantity P2 of levels included in the second signal is a fixed value, that is, the quantity of levels included in the second signal does not change with the value of N. For example, P2 may be any integer not less than 2 or not less than 4. For example, a value of P2 is fixed to 4. In this way, a quantity of levels that can be used when the tag performs clock calibration can be effectively ensured, thereby ensuring accuracy of obtaining a level boundary (symbol boundary) during detection. For example, the quantity P1 of levels included in the first signal may satisfy the formula P1=M*K*N*X. Herein, 0<X<1, and when N is equal to 1, K is a quantity of levels included in one OFDM symbol (that is, when the first frequency domain resource includes 12 subcarriers, K is a quantity of levels included in one OFDM symbol). When N is greater than 1, a quantity of levels included in one OFDM symbol is K*N, where K is usually a positive integer.

Optionally, when K is equal to 6, the quantity P1 of levels included in the first signal is usually an integer not less than 2 (that is, P1≥2, and P is an integer).

For ease of understanding, descriptions are provided below mainly by using an example in which M=1, K=6, X=1/3, and P2=4. When the duration of the first time domain resource is less than or equal to the duration of one OFDM symbol (that is, the duration of the synchronization signal is less than or equal to the duration of the one OFDM symbol), the duration of the first signal is 1/3 of the duration of the one OFDM symbol, and the quantity of levels included in the first signal is 6*N*1/3; and the duration of the second signal is inversely proportional to a value of N, and the quantity of levels included in the second signal is fixed to 4.

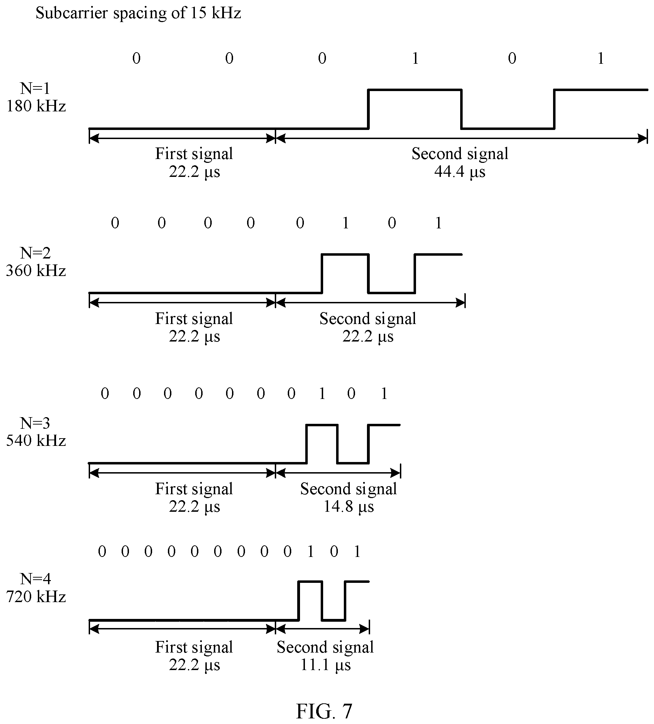

For example, FIG. 7 is a diagram of another structure of a synchronization signal according to an embodiment of this application. As shown in FIG. 7, for example, a subcarrier spacing is equal to 15 kHz. When a duration of the synchronization signal is less than or equal to a duration of one (that is, M=1) OFDM symbol (which is equivalent to the duration of the synchronization signal being less than or equal to 66.6 µs), K=6, X=1/3, and P2=4, if a first signal is an all-{0} signal, and a second signal is a signal that uses the alternating {0} and {1} pattern, details are as follows:

When N is equal to 1, a quantity of levels included in the first signal is 2 (that is, the first signal is {00}), and a quantity of levels included in the second signal is 4 (that is, the second signal is {0101}). When the subcarrier spacing is equal to 15 kHz, before a CP is added, a duration T1 of the first signal is 22.2 µs, and a duration T2 of the second signal is 44.4 µs.

When N is equal to 2, a quantity of levels included in the first signal is 4 (that is, the first signal is {0000}), and a quantity of levels included in the second signal is 4 (that is, the second signal is {0101}). When the subcarrier spacing is equal to 15 kHz, before a CP is added, a duration T1 of the first signal is 22.2 µs, and a duration T2 of the second signal is 22.2 µs.

When N is equal to 3, a quantity of levels included in the first signal is 6 (that is, the first signal is {000000}), and a quantity of levels included in the second signal is 4 (that is, the second signal is {0101}). When the subcarrier spacing is equal to 15 kHz, before a CP is added, a duration T1 of the first signal is 22.2 µs, and a duration T2 of the second signal is 14.8 µs.

When N is equal to 4, a level included in the first signal is 8 (that is, the first signal is {00000000}), and a quantity of levels included in the second signal is 4 (that is, the second signal is {0101}). When the subcarrier spacing is equal to 15 kHz, before a CP is added, a duration T1 of the first signal is 22.2 µs, and a duration T2 of the second signal is 11.1 µs.

It can be learned from FIG. 7 that when the subcarrier spacing is equal to 15 kHz, before the CP is added, the duration of the first signal is T1=1/3*66.6 µs, that is, 22.2 µs. The duration of the second signal is inversely proportional to a value of N. When N is equal to 1, the duration of the second signal is 44.4 µs. When N is equal to 2, the duration of the second signal is 22.2 µs. When N is equal to 3, the duration of the second signal is 14.8 µs. When N is equal to 4, the duration of the second signal is 11.1 µs. The quantity of levels included in the first signal is 6*N*1/3, and the quantity of levels included in the second signal is fixed to 4.

In Manner 2, in another design, the synchronization signal includes the first signal, the second signal, and a third signal. The duration of the first time domain resource for transmitting the synchronization signal is equal to the duration of the M OFDM symbols. In other words, the sum of a duration of the first signal, a duration of the second signal, and a duration of the third signal is equal to the duration of the M OFDM symbols.

The third signal is before the first signal, that is, an arrangement sequence of the first signal, the second signal, and the third signal in the synchronization signal is {the third signal, the first signal, the second signal}. For example, any level included in the third signal may be a second level, that is, the third signal is an all-{1} (or all-high-level) signal. This helps the tag obtain more energy, thereby helping maintain normal communication.

It should be understood that, because the sum of the duration of the first signal, the duration of the second signal, and the duration of the third signal is equal to the duration of the M OFDM symbols, the duration T3 of the third signal may satisfy the formula T3=M*T-T1-T2. Optionally, a quantity P3 of levels included in the third signal may satisfy the formula P3=M*K*N-P1-P2. K is a quantity of levels included in one OFDM symbol when N is equal to 1, and K is a positive integer. Herein, M*K*N is a total quantity of levels included in the synchronization signal. When K is equal to 6 and M is equal to 1, the total quantity of levels included in the synchronization signal in Manner 2 is 6*N. Therefore, the quantity P3 of levels included in the third signal satisfies: P3=6*N-6*N*X-P2.

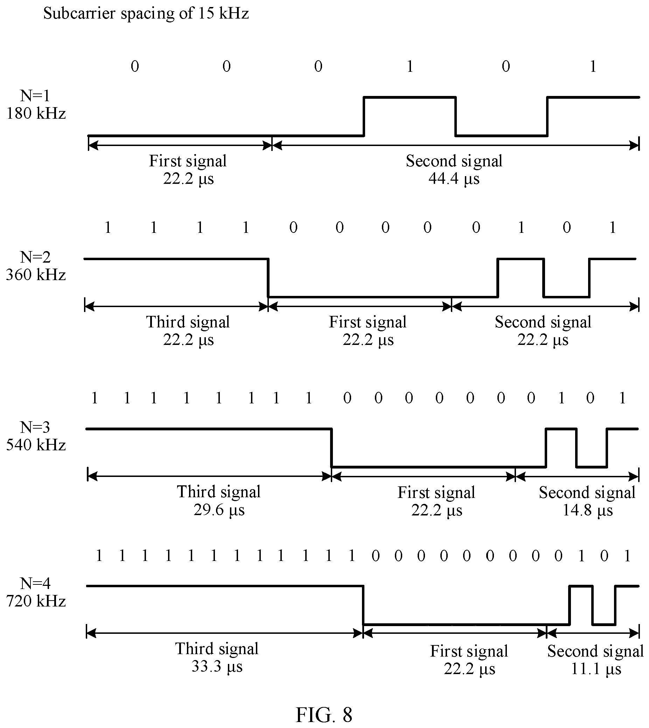

For example, FIG. 8 is a diagram of another structure of a synchronization signal according to an embodiment of this application. As shown in FIG. 8, for example, a subcarrier spacing is equal to 15 kHz. When a duration of the synchronization signal is equal to a duration of one (that is, M=1) OFDM symbol (which is equivalent to the duration of the synchronization signal being equal to 66.6 µs), K=6, X=1/3, and P2=4, if the third signal is an all-{1} signal, the first signal is an all-{0} signal, and the second signal is a signal that uses the alternating {0} and {1} pattern, details are as follows:
When N is equal to 1, a quantity of levels included in the third signal is 0 (that is, there is no third signal), a quantity of levels included in the first signal is 2 (that is, the first signal is {00}), and a quantity of levels included in the second signal is 4 (that is, the second signal is {0101}). When the subcarrier spacing is equal to 15 kHz, before a CP is added, a duration T3 of the third signal is 0 µs, a duration T1 of the first signal is 22.2 µs, and a duration T2 of the second signal is 44.4 µs.
When N is equal to 2, a quantity of levels included in the third signal is 4 (that is, the third signal is {1111}), a quantity of levels included in the first signal is 4 (that is, the first signal is {0000}), and a quantity of levels included in the second signal is 4 (that is, the second signal is {0101}). When the subcarrier spacing is equal to 15 kHz, before a CP is added, a duration T3 of the third signal is 22.2 µs, a duration T1 of the first signal is 22.2 µs, and a duration T2 of the second signal is 22.2 µs.
When N is equal to 3, a quantity of levels included in the third signal is 8 (that is, the third signal is {11111111}), a quantity of levels included in the first signal is 6 (that is, the first signal is {000000}), and a quantity of levels included in the second signal is 4 (that is, the second signal is {0101}). When the subcarrier spacing is equal to 15 kHz, before a CP is added, a duration T3 of the third signal is 29.6 µs, a duration T1 of the first signal is 22.2 µs, and a duration T2 of the second signal is 14.8 µs.
When N is equal to 4, a quantity of levels included in the third signal is 12 (that is, the third signal is {111111111111}), a level included in the first signal is 8 (that is, the first signal is {00000000}), and a quantity of levels included in the second signal is 4 (that is, the second signal is {0101}). When the subcarrier spacing is equal to 15 kHz, before a CP is added, a duration T3 of the third signal is 33.3 µs, a duration T1 of the first signal is 22.2 µs, and a duration T2 of the second signal is 11.1 µs.

It can be learned from FIG. 8 that when the subcarrier spacing is equal to 15 kHz, before the CP is added, the duration of the first signal is T1=1/3*Duration of one OFDM symbol, that is, 22.2 µs. The duration of the second signal is inversely proportional to a value of N. When N is equal to 1, the duration of the second signal is 44.4 µs. When N is equal to 2, the duration of the second signal is 22.2 µs. When N is equal to 3, the duration of the second signal is 14.8 µs. When N is equal to 4, the duration of the second signal is 11.1 µs. The duration of the third signal is T3=66.6 µs-T1-T2. The quantity of levels included in the first signal is 6*N*1/3, the quantity of levels included in the second signal is fixed to 4, and the quantity of levels included in the third signal is P3=6*N-6*N*1/3-4.

Optionally, in this application, a network device may specifically process the synchronization signal in a DFT-s-OFDM generation manner shown in FIG. 6, and then send a processed synchronization signal. A length of a DFT input sequence is N*12, and a pattern of the DFT input sequence is a level pattern formed when a quantity of repetitions of each level in all levels included in the third signal, the first signal, and the second signal is equal to 12/K. For example, when K is equal to 6, the quantity of repetitions is equal to 2. For example, if the duration of the synchronization signal is one OFDM symbol (that is, M=1), when N is equal to 2, the levels included in the third signal are {1111}, the levels in the first signal are {0000}, and the levels included in the second signal are {0101}. Each level in the third signal, the first signal, and the second signal is repeated once (that is, a quantity of repetitions of each level is equal to 2), so that levels {11111111}, {00000000}, and {00110011} can be obtained, that is, the DFT input sequence is {111111110000000000110011}.

Based on the design in Manner 2, performance of a synchronization signal in a passive IoT system can be effectively ensured. The duration of the first signal in different bandwidths remains unchanged, and is not shorter than a specified duration of a passive tag delimiter (for example, the duration of the delimiter is not less than 12.5 µs), and therefore the first signal herein is equivalent to a delimiter (delimiter) signal, which can effectively ensure buffer time for data receiving when the tag is started. The quantity of levels included in the second signal is fixed to 4, so that a transmission peak rate of the (passive or semi-passive) tag is maximized as much as possible while a quantity of levels that can be used when the tag performs clock calibration is effectively ensured.

### Manner 3

In Manner 3, in one design, the synchronization signal includes the first signal and the second signal. The duration of the first time domain resource for transmitting the synchronization signal is less than or equal to the duration of the M OFDM symbols. In other words, the sum of a duration of the first signal and a duration of the second signal is equal to the duration of the M OFDM symbols.

For example, any level included in the first signal may be a first level, that is, the first signal is an all-{0} (or all-low-level) signal. Optionally, the first signal may alternatively follow a predefined/preset pattern. For example, the first signal may be a signal in a combined pattern of {01} and {10}. This is not limited in this application. It should be understood that, when the first signal is an all-low-level signal, this design of the first signal can avoid confusion between the first signal and a subsequent second signal and data signal, thereby helping improve demodulation performance. Therefore, descriptions are provided below mainly by using an example in which the first signal is an all-low-level signal.

The second signal includes at least one first level and at least one second level, and a quantity of first levels included in the second signal is equal to a quantity of second levels, that is, the second signal is a signal in which a quantity of {0} is equal to a quantity of {1} (or a quantity of low levels is equal to a quantity of high levels). The second level is higher than the first level. The second level may also be referred to as a high level, an OOK symbol {1}, or an OOK chip {1}. The first level may also be referred to as a low level, an OOK symbol {0}, or an OOK chip {0}, or the like. This is not specifically limited in this embodiment of this application.

For example, the second signal may follow a predefined/preset pattern. Optionally, the second signal may further satisfy the following: A 1^{st} level in the second signal may be the first level. For example, the second signal may be a signal in a combined pattern of {01} and {10}, for example, {0110} or {1001}. This is not limited in this application.

For example, the second signal may be one of signals in a plurality of predefined/preset patterns, where different preset patterns may indicate different subcarrier spacings of a data signal, or different preset patterns may indicate different CP lengths of a data signal. For example, the second signal may be one of signals in two predefined patterns. For example, the two predefined patterns are {0110} and {1001}. When the preset pattern of the second signal is {0110}, it may indicate that the subcarrier spacing of the data signal is 15 kHz. When the preset pattern of the second signal is {1001}, it may indicate that the subcarrier spacing of the data signal is 30 kHz. Alternatively, when the preset pattern of the second signal is {0110}, it may indicate that the CP length of the data signal is a CP length corresponding to the subcarrier spacing 15 kHz. When the preset pattern of the second signal is {1001}, it may indicate that the CP length of the data signal is a CP length corresponding to the subcarrier spacing 30 kHz.

For another example, in addition to the quantity of first levels included in the second signal in this application being equal to the quantity of second levels, the second signal may further satisfy the following: A level adjacent to any first level included in the second signal may be the second level, and a level adjacent to any second level included in the second signal may be the first level. Optionally, the second signal may further satisfy the following: A 1^{st} level in the second signal may be the first level, and a last level in the second signal is the second level. For example, the second signal may be a signal that uses the alternating {0} and {1} pattern. For example, the second signal is {0101}.

Preferably, the second signal is a signal that uses the alternating {0} and {1} pattern.

It should be noted that, in this application, the duration of the second level is equal to the duration of the first level.

Optionally, the sum of the duration T1 of the first signal and the duration of the first level in the second signal is a fixed value, that is, the sum of the duration T1 of the first signal and a duration of one first level does not change with a value of N. Optionally, the duration T2 of the second signal is inversely proportional to a value of N.

For example, the duration T1 of the first signal may satisfy the formula T1=M*T*X-M*T/K*N, where M*T/K*N represents a duration of a unit level. The duration T2 of the second signal may satisfy the formula T2=M*T*(1-X)/N. Herein, T represents a duration of one OFDM symbol, or represents a duration of one OFDM symbol on which a CP is not added. Generally, a duration of one OFDM symbol is a reciprocal of a subcarrier spacing. For example, when the subcarrier spacing is equal to 15 kHz, a duration of one OFDM symbol is 1/15 kHz=66.6 µs. For another example, when the subcarrier spacing is equal to 30 kHz, a duration of one OFDM symbol is 1/30 kHz=33.3 µs.

It should be noted that X needs to satisfy the formula 0<X<1. It should be understood that, when M=1, a value of X is associated with a subcarrier spacing. For example, when M is equal to 1 and K is equal to 6, if the subcarrier spacing is 15 kHz, X=1/3, because the duration of the first signal needs to be not shorter than a specified duration of a passive tag delimiter (for example, the duration of the delimiter is not less than 12.5 µs). When M is equal to 1 and K is equal to 6, if the subcarrier spacing is 30 kHz, X=1/2, because the duration of the first signal needs to be not shorter than a duration of a passive tag delimiter (for example, the duration of the delimiter is not less than 12.5 µs). Herein, when N is equal to 1, K is a quantity of levels included in one OFDM symbol (that is, when the first frequency domain resource includes 12 subcarriers, K is a quantity of levels included in one OFDM symbol). When N is greater than 1, a quantity of levels included in one OFDM symbol is K*N. It should be noted that when M is equal to 1, K is equal to 6, and the subcarrier spacing is 15 kHz, X=1/3 is a preferred solution, and X=1/2 is a second preferred solution. When M is equal to 1, K is equal to 6, and the subcarrier spacing is 30 kHz, X=1/2 is a preferred solution. For ease of description, for Manner 3, descriptions are provided below mainly by using an example in which X=1/2 when M is equal to 1, K is equal to 6, and the subcarrier spacing is 15 kHz.

Optionally, the sum of a quantity P1 of levels included in the first signal and 1 is directly proportional to a value of N. A quantity P2 of levels included in the second signal is a fixed value, that is, the quantity of levels included in the second signal does not change with the value of N. For example, P2 may be any integer not less than 2 or not less than 4. For example, a value of P2 is fixed to 4. In this way, a quantity of levels that can be used when the tag performs clock calibration can be effectively ensured, thereby ensuring accuracy of obtaining a level boundary (symbol boundary) during detection. For example, the quantity P1 of levels included in the first signal may satisfy the formula P1=M*K*N*X-1. Herein, 0<X<1, and when N is equal to 1, K is a quantity of levels included in one OFDM symbol (that is, when the first frequency domain resource includes 12 subcarriers, K is a quantity of levels included in one OFDM symbol). When N is greater than 1, a quantity of levels included in one OFDM symbol is K*N, where K is usually a positive integer.

Optionally, when K is equal to 6, the quantity P1 of levels included in the first signal is usually an integer not less than 2 (that is, P1≥2, and P is an integer).

For ease of understanding, descriptions are provided below mainly by using an example in which M=1, K=6, X=1/2, and P2=4. When the first time domain resource includes one OFDM symbol (that is, a duration of the synchronization signal is one OFDM symbol), the sum of the duration of the first signal and the duration of the first level in the second signal is 1/2 of a duration of one OFDM symbol, and the quantity of levels included in the first signal is 6*N*1/2-1; and the duration of the second signal is inversely proportional to a value of N, and the quantity of levels included in the second signal is fixed to 4.

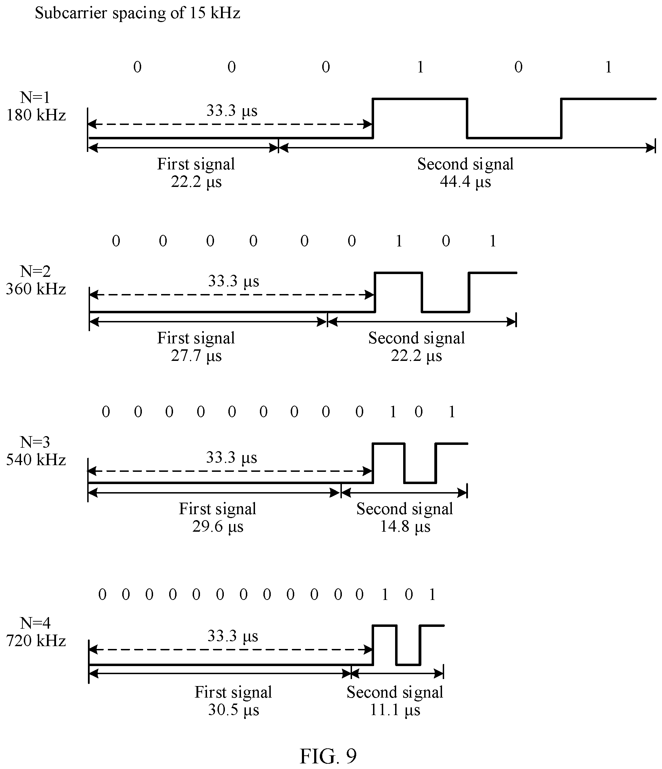

For example, FIG. 9 is a diagram of another structure of a synchronization signal according to an embodiment of this application. As shown in FIG. 9, for example, a subcarrier spacing is equal to 15 kHz. When a duration of the synchronization signal is less than or equal to a duration of one (that is, M=1) OFDM symbol (which is equivalent to the duration of the synchronization signal being less than or equal to 66.6 µs), K=6, X=1/2, and P2=4, if a first signal is an all-{0} signal, and a second signal is a signal that uses the alternating {0} and {1} pattern, details are as follows:
When N is equal to 1, a quantity of levels included in the first signal is 2 (that is, the first signal is {00}), and a quantity of levels included in the second signal is 4 (that is, the second signal is {0101}). When the subcarrier spacing is equal to 15 kHz, before a CP is added, a duration T1 of the first signal is 22.2 µs, and a duration T2 of the second signal is 44.4 µs.
When N is equal to 2, a quantity of levels included in the first signal is 5 (that is, the first signal is {00000}), and a quantity of levels included in the second signal is 4 (that is, the second signal is {0101}). When the subcarrier spacing is equal to 15 kHz, before a CP is added, a duration T1 of the first signal is 27.7 µs, and a duration T2 of the second signal is 22.2 µs.
When N is equal to 3, a quantity of levels included in the first signal is 8 (that is, the first signal is {00000000}), and a quantity of levels included in the second signal is 4 (that is, the second signal is {0101}). When the subcarrier spacing is equal to 15 kHz, before a CP is added, a duration T1 of the first signal is 29.6 µs, and a duration T2 of the second signal is 14.8 µs.
When N is equal to 4, a level included in the first signal is 11 (that is, the first signal is {00000000000}), and a quantity of levels included in the second signal is 4 (that is, the second signal is {0101}). When the subcarrier spacing is equal to 15 kHz, before a CP is added, a duration T1 of the first signal is 30.5 µs, and a duration T2 of the second signal is 11.1 µs.

It can be learned from FIG. 9 that when the subcarrier spacing is equal to 15 kHz, before the CP is added, the duration of the first signal is T1=1/2*66.6 µs-66.6 µs/6*N. In other words, the sum of the duration T1 of the first signal and a duration of one first level in the second signal is a fixed value 33.3 µs. The duration of the second signal is inversely proportional to a value of N. When N is equal to 1, the duration of the second signal is 44.4 µs. When N is equal to 2, the duration of the second signal is 22.2 µs. When N is equal to 3, the duration of the second signal is 14.8 µs. When N is equal to 4, the duration of the second signal is 11.1 µs. The quantity of levels included in the first signal is 6*N*1/2-1, and the quantity of levels included in the second signal is fixed to 4.

In Manner 3, in another design, the synchronization signal includes the first signal, the second signal, and a third signal. The duration of the first time domain resource for transmitting the synchronization signal is equal to the duration of the M OFDM symbols. In other words, the sum of a duration of the first signal, a duration of the second signal, and a duration of the third signal is equal to the duration of the M OFDM symbols.

The third signal is before the first signal, that is, an arrangement sequence of the first signal, the second signal, and the third signal in the synchronization signal is {the third signal, the first signal, the second signal}. For example, any level included in the third signal may be a second level, that is, the third signal is an all-{1} (or all-high-level) signal. This helps the tag obtain more energy, thereby helping maintain normal communication.

It should be understood that, because the sum of the duration of the first signal, the duration of the second signal, and the duration of the third signal is equal to the duration of the M OFDM symbols, the duration T3 of the third signal may satisfy the formula T3=M*T-T1-T2. Optionally, a quantity P3 of levels included in the third signal may satisfy the formula P3=M*K*N-P1-P2. K is a quantity of levels included in one OFDM symbol when N is equal to 1, and K is a positive integer. Herein, M*K*N is a total quantity of levels included in the synchronization signal. When K is equal to 6 and M is equal to 1, the total quantity of levels included in the synchronization signal in Manner 3 is 6*N. Therefore, the quantity P3 of levels included in the third signal satisfies: P3=6*N-6*N*X-P2.

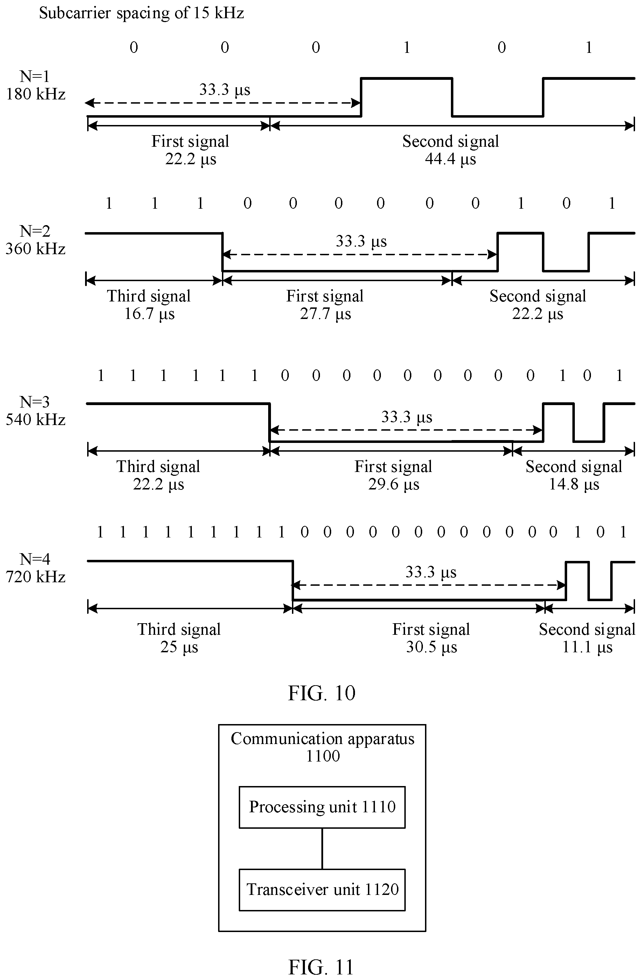

For example, FIG. 10 is a diagram of another structure of a synchronization signal according to an embodiment of this application. As shown in FIG. 10, for example, a subcarrier spacing is equal to 15 kHz. When a duration of the synchronization signal is equal to a duration of one (that is, M=1) OFDM symbol (which is equivalent to the duration of the synchronization signal being equal to 66.6 µs), K=6, X=1/2, and P2=4, if a third signal is an all-{1} signal, a first signal is an all-{0} signal, and a second signal is a signal that uses the alternating {0} and {1} pattern, details are as follows:

When N is equal to 1, a quantity of levels included in the third signal is 0 (that is, there is no third signal), a quantity of levels included in the first signal is 2 (that is, the first signal is {00}), and a quantity of levels included in the second signal is 4 (that is, the second signal is {0101}). When the subcarrier spacing is equal to 15 kHz, before a CP is added, a duration T3 of the third signal is 0 µs, a duration T1 of the first signal is 22.2 µs, and a duration T2 of the second signal is 44.4 µs.

When N is equal to 2, a quantity of levels included in the third signal is 3 (that is, the third signal is {111}), a quantity of levels included in the first signal is 5 (that is, the first signal is {00000}), and a quantity of levels included in the second signal is 4 (that is, the second signal is {0101}). When the subcarrier spacing is equal to 15 kHz, before a CP is added, a duration T3 of the third signal is 16.7 µs, a duration T1 of the first signal is 27.7 µs, and a duration T2 of the second signal is 22.2 µs.

When N is equal to 3, a quantity of levels included in the third signal is 6 (that is, the third signal is {111111}), a quantity of levels included in the first signal is 8 (that is, the first signal is {00000000}), and a quantity of levels included in the second signal is 4 (that is, the second signal is {0101}). When the subcarrier spacing is equal to 15 kHz, before a CP is added, a duration T3 of the third signal is 22.2 µs, a duration T1 of the first signal is 29.6 µs, and a duration T2 of the second signal is 14.8 µs.

When N is equal to 4, a quantity of levels included in the third signal is 9 (that is, the third signal is {111111111}), a level included in the first signal is 11 (that is, the first signal is {00000000000}), and a quantity of levels included in the second signal is 4 (that is, the second signal is {0101}). When the subcarrier spacing is equal to 15 kHz, before a CP is added, a duration T3 of the third signal is 25 µs, a duration T1 of the first signal is 30.5 µs, and a duration T2 of the second signal is 11.1 µs.

It can be learned from FIG. 10 that when the subcarrier spacing is equal to 15 kHz, before the CP is added, the duration of the first signal is T1=1/2*66.6 µs-66.6 µs/6*N. In other words, the sum of the duration T1 of the first signal and a duration of one first level in the second signal is a fixed value 33.3 µs. The duration of the second signal is inversely proportional to a value of N. When N is equal to 1, the duration of the second signal is 44.4 µs. When N is equal to 2, the duration of the second signal is 22.2 µs. When N is equal to 3, the duration of the second signal is 14.8 µs. When N is equal to 4, the duration of the second signal is 11.1 µs. The duration of the third signal is T3=66.6 µs-T1-T2. The quantity of levels included in the first signal is 6*N*1/2-1, the quantity of levels included in the second signal is fixed to 4, and the quantity of levels included in the third signal is P3=6*N-(6*N*1/2-1)-4.

Optionally, in this application, a network device may specifically process the synchronization signal in a DFT-s-OFDM generation manner shown in FIG. 6, and then send a processed synchronization signal. A length of a DFT input sequence is N*12, and a pattern of the DFT input sequence is a level pattern formed when a quantity of repetitions of each level in all levels included in the third signal, the first signal, and the second signal is equal to 12/K. For example, when K is equal to 6, the quantity of repetitions is equal to 2. For example, if the duration of the synchronization signal is one OFDM symbol (that is, M=1), when N is equal to 2, the levels included in the third signal are {111}, the levels in the first signal are {00000}, and the levels included in the second signal are {0101}. Each level in the third signal, the first signal, and the second signal is repeated once (that is, a quantity of repetitions of each level is equal to 2), so that levels {111111}, {0000000000}, and {00110011} can be obtained, that is, the DFT input sequence is {111111000000000000110011}.

Based on the design in Manner 3, performance of a synchronization signal in a passive IoT system can be effectively ensured. The duration of the first signal and a duration of a 1^{st} level in the second signal in different bandwidths remain unchanged, and neither are shorter than a specified duration of a passive tag delimiter (for example, the duration of the delimiter is not less than 12.5 µs), and therefore the first signal and the 1^{st} level in the second signal herein are equivalent to a delimiter (delimiter) signal, which can effectively ensure buffer time for data receiving when the tag is started. The quantity of levels included in the second signal is fixed to 4, so that a transmission peak rate of the (passive or semi-passive) tag is maximized as much as possible while a quantity of levels that can be used when the tag performs clock calibration is effectively ensured.

Embodiments of this application are compatible with design of the synchronization signal of the passive tag in different downlink signal bandwidths, thereby helping improve communication performance. In addition, the design of the synchronization signal of the passive tag in this application may further adapt to Manchester encoding, that is, high and low level duration of bit 0 and bit 1 is equal, which helps improve demodulation performance.

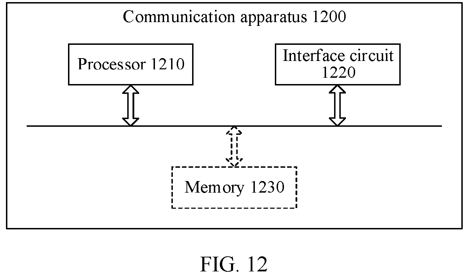

The following describes, in detail with reference to FIG. 11 and FIG. 12, communication apparatuses provided in this application.

It may be understood that, to implement the functions in the foregoing embodiments, the communication apparatus includes a corresponding hardware structure and/or software module for performing each function. Persons skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

FIG. 11 and FIG. 12 each are a diagram of a structure of a possible communication apparatus according to an embodiment of this application. These communication apparatuses may be configured to implement functions of the network device or (passive or semi-passive) tag in the foregoing method embodiments, and therefore can also implement beneficial effects of the foregoing method embodiments. In embodiments of this application, these communication apparatuses may be network devices or (passive or semi-passive) tags, components or apparatuses (for example, processors, chips, or chip systems) used in the network devices or (passive or semi-passive) tags, or logical modules or software that can implement all or some functions of the network devices or (passive or semi-passive) tags.

As shown in FIG. 11, the communication apparatus 1100 includes a processing unit 1110 and a transceiver unit 1120. The communication apparatus 1100 is configured to implement a function of the network device or (passive or semi-passive) tag in the method embodiment shown in FIG. 4.

When the communication apparatus 1100 is configured to implement the function of the network device in the method embodiment shown in FIG. 4:

### In a design:

The processing unit 1110 is configured to determine a synchronization signal.

The transceiver unit 1120 is configured to send the synchronization signal on a first time domain resource and a first frequency domain resource, where the first time domain resource includes M orthogonal frequency division multiplexing OFDM symbols, the first frequency domain resource includes N*12 subcarriers, and both M and N are positive integers, where
a modulation scheme of the synchronization signal is on-off keying OOK, the synchronization signal includes a first signal and a second signal, the first signal indicates that the second signal is after and adjacent to the first signal, and the second signal is used for time calibration; and both a duration T1 of the first signal and a duration T2 of the second signal are fixed values, and the sum of T1 and T2 is equal to a duration of the M OFDM symbols.

In a possible design, any level included in the first signal is a first level.

In a possible design, the second signal includes at least one first level and at least one second level, a quantity of first levels included in the second signal is equal to a quantity of second levels, the second level is higher than the first level, and a duration of the second level is equal to a duration of the first level.

In a possible design, a level adjacent to any first level included in the second signal is the second level, a level adjacent to any second level included in the second signal is the first level, and the second level is higher than the first level.

In a possible design, a duration of one OFDM symbol is T;
the duration T1 of the first signal satisfies: $T 1 = M * T * X ;$ and
the duration T2 of the second signal satisfies: $T 2 = M * T * \left(1-X\right) ,$
where 0<X<1, and when M=1, a value of X is associated with a subcarrier spacing.

In a possible design, a quantity P1 of levels included in the first signal is directly proportional to a value of N, and a quantity P2 of levels included in the second signal is directly proportional to the value of N.

In a possible design, the quantity P1 of levels included in the first signal satisfies: $P 1 = M * K * N * X ;$ and
the quantity P2 of levels included in the second signal satisfies: $P 2 = M * K * N * \left(1-X\right) ,$ where $0 < X < 1 ,$ K is a quantity of levels included in one OFDM symbol when N is equal to 1, and K is a positive integer.

In a possible design, when K is equal to 6, the quantity P1 of levels included in the first signal is an integer not less than 2, and the quantity P2 of levels included in the second signal is an integer not less than 2 or an integer not less than 4.

In a possible design, X is 1/3 or 1/2 when M is equal to 1 and K is equal to 6.

### In another design:

The processing unit 1110 is configured to determine a synchronization signal.

The transceiver unit 1120 is configured to send the synchronization signal on a first time domain resource and a first frequency domain resource, where a duration of the first time domain resource is less than or equal to a duration of M orthogonal frequency division multiplexing OFDM symbols, the first frequency domain resource includes N*12 subcarriers, and both M and N are positive integers, where
a modulation scheme of the synchronization signal is on-off keying OOK, the synchronization signal includes a first signal and a second signal, the first signal indicates that the second signal is after and adjacent to the first signal, the second signal is used for time calibration, and both a duration T1 of the first signal and a quantity P2 of levels included in the second signal are fixed values.

In a possible design, any level included in the first signal is a first level.

In a possible design, the second signal includes at least one first level and at least one second level, a quantity of first levels included in the second signal is equal to a quantity of second levels, the second level is higher than the first level, and a duration of the second level is equal to a duration of the first level.

In a possible design, a level adjacent to any first level included in the second signal is the second level, a level adjacent to any second level included in the second signal is the first level, and the second level is higher than the first level.

In a possible design, a duration T2 of the second signal is inversely proportional to a value of N.

In a possible design, a duration of one OFDM symbol is T;
the duration T1 of the first signal satisfies: $T 1 = M * T * X ;$ and
the duration T2 of the second signal satisfies: $T 2 = M * T * \left(1-X\right) / N ,$
where 0<X<1, and when M=1, a value of X is associated with a subcarrier spacing.

In a possible design, a quantity P1 of levels included in the first signal is directly proportional to a value of N.

In a possible design, the quantity P1 of levels included in the first signal satisfies: $P 1 = M * K * N * X ,$ where $0 < X < 1 ,$ K is a quantity of levels included in one OFDM symbol when N is equal to 1, and K is a positive integer.

In a possible design, when K is equal to 6, the quantity P1 of levels included in the first signal is an integer not less than 2, and the quantity P2 of levels included in the second signal is an integer not less than 2 or an integer not less than 4.

In a possible design, X is 1/3 or 1/2 when M is equal to 1 and K is equal to 6.

In a possible design, the duration of the first time domain resource is equal to the duration of the M OFDM symbols; and the synchronization signal further includes a third signal, the third signal is before the first signal, and any level included in the third signal is a second level;
a duration T3 of the third signal satisfies: $T 3 = M * T - T 1 - T 2 ;$ and
a quantity P3 of levels included in the third signal satisfies: $P 3 = M * K * N - P 1 - P 2 ,$ where
K is a quantity of levels included in one OFDM symbol when N is equal to 1, and K is a positive integer.

In a possible design, P2 is equal to 4.

### In still another design:

The processing unit 1110 is configured to determine a synchronization signal.

The transceiver unit 1120 is configured to send the synchronization signal on a first time domain resource and a first frequency domain resource, where a duration of the first time domain resource is less than or equal to a duration of M orthogonal frequency division multiplexing OFDM symbols, the first frequency domain resource includes N×12 subcarriers, and both M and N are positive integers, where
a modulation scheme of the synchronization signal is on-off keying OOK, the synchronization signal includes a first signal and a second signal, the first signal indicates that the second signal is after and adjacent to the first signal, the second signal is used for time calibration, the sum of a duration T1 of the first signal and a duration of a first level in the second signal is a fixed value, and a quantity P2 of levels included in the second signal is a fixed value.

In a possible design, any level included in the first signal is a first level.

In a possible design, the second signal includes at least one first level and at least one second level, a quantity of first levels included in the second signal is equal to a quantity of second levels, the second level is higher than the first level, and a duration of the second level is equal to a duration of the first level.

In a possible design, a level adjacent to any first level included in the second signal is the second level, a level adjacent to any second level included in the second signal is the first level, and the second level is higher than the first level.

In a possible design, a duration T2 of the second signal is inversely proportional to a value of N.

In a possible design, a duration of one OFDM symbol is T;
the duration T1 of the first signal satisfies: $T 1 = M * T * X - M * T / K * N ;$ and
the duration T2 of the second signal satisfies: $T 2 = M * T * \left(1-X\right) / N ,$
where 0<X<1, and when M=1, a value of X is associated with a subcarrier spacing.

In a possible design, the sum of a quantity P1 of levels included in the first signal and 1 is directly proportional to a value of N.

In a possible design, the quantity P1 of levels included in the first signal satisfies: $P 1 = M * K * N * X - 1 ,$ where $0 < X < 1 ,$ K is a quantity of levels included in one OFDM symbol when N is equal to 1, and K is a positive integer.

In a possible design, when K is equal to 6, the quantity P1 of levels included in the first signal is an integer not less than 2, and the quantity P2 of levels included in the second signal is an integer not less than 2 or an integer not less than 4.

In a possible design, X is 1/3 or 1/2 when M is equal to 1 and K is equal to 6.

In a possible design, the duration of the first time domain resource is equal to the duration of the M OFDM symbols; and the synchronization signal further includes a third signal, the third signal is before the first signal, and any level included in the third signal is a second level;
a duration T3 of the third signal satisfies: $T 3 = M * T - T 1 - T 2 ;$ and
a quantity P3 of levels included in the third signal satisfies: $P 3 = M * K * N - P 1 - P 2 ,$ where
K is a quantity of levels included in one OFDM symbol when N is equal to 1, and K is a positive integer.

In a possible design, P2 is equal to 4.

When the communication apparatus 1100 is configured to implement a function of the (passive or semi-passive) tag in the method embodiment shown in FIG. 4:

### In a design:

The transceiver unit 1120 is configured to receive a synchronization signal on a first time domain resource and a first frequency domain resource, where the first time domain resource includes M orthogonal frequency division multiplexing OFDM symbols, the first frequency domain resource includes N*12 subcarriers, and both M and N are positive integers, where
a modulation scheme of the synchronization signal is on-off keying OOK, the synchronization signal includes a first signal and a second signal, the first signal indicates that the second signal is after and adjacent to the first signal, and the second signal is used for time calibration; and both a duration T1 of the first signal and a duration T2 of the second signal are fixed values, and the sum of T1 and T2 is equal to a duration of the M OFDM symbols.

The processing unit 1110 is configured to parse the synchronization signal.

In a possible design, any level included in the first signal is a first level.

In a possible design, the second signal includes at least one first level and at least one second level, a quantity of first levels included in the second signal is equal to a quantity of second levels, the second level is higher than the first level, and a duration of the second level is equal to a duration of the first level.

In a possible design, a level adjacent to any first level included in the second signal is the second level, a level adjacent to any second level included in the second signal is the first level, and the second level is higher than the first level.

In a possible design, a duration of one OFDM symbol is T;
the duration T1 of the first signal satisfies: $T 1 = M * T * X ;$ and
the duration T2 of the second signal satisfies: $T 2 = M * T * \left(1-X\right) ,$
where 0<X<1, and when M=1, a value of X is associated with a subcarrier spacing.

In a possible design, a quantity P1 of levels included in the first signal is directly proportional to a value of N, and a quantity P2 of levels included in the second signal is directly proportional to the value of N.

In a possible design, the quantity P1 of levels included in the first signal satisfies: $P 1 = M * K * N * X ;$ and
the quantity P2 of levels included in the second signal satisfies: $P 2 = M * K * N * \left(1-X\right) ,$ where $0 < X < 1 ,$ K is a quantity of levels included in one OFDM symbol when N is equal to 1, and K is a positive integer.

In a possible design, when K is equal to 6, the quantity P1 of levels included in the first signal is an integer not less than 2, and the quantity P2 of levels included in the second signal is an integer not less than 2 or an integer not less than 4.

In a possible design, X is 1/3 or 1/2 when M is equal to 1 and K is equal to 6.

### In another design:

The transceiver unit 1120 is configured to receive a synchronization signal on a first time domain resource and a first frequency domain resource, where a duration of the first time domain resource is less than or equal to a duration of M orthogonal frequency division multiplexing OFDM symbols, the first frequency domain resource includes N*12 subcarriers, and both M and N are positive integers, where
a modulation scheme of the synchronization signal is on-off keying OOK, the synchronization signal includes a first signal and a second signal, the first signal indicates that the second signal is after and adjacent to the first signal, the second signal is used for time calibration, and both a duration T1 of the first signal and a quantity P2 of levels included in the second signal are fixed values.

The processing unit 1110 is configured to parse the synchronization signal.

In a possible design, any level included in the first signal is a first level.

In a possible design, the second signal includes at least one first level and at least one second level, a quantity of first levels included in the second signal is equal to a quantity of second levels, the second level is higher than the first level, and a duration of the second level is equal to a duration of the first level.

In a possible design, a level adjacent to any first level included in the second signal is the second level, a level adjacent to any second level included in the second signal is the first level, and the second level is higher than the first level.

In a possible design, a duration T2 of the second signal is inversely proportional to a value of N.

In a possible design, a duration of one OFDM symbol is T;
the duration T1 of the first signal satisfies: $T 1 = M * T * X ;$ and
the duration T2 of the second signal satisfies: $T 2 = M * T * \left(1-X\right) / N ,$
where 0<X<1, and when M=1, a value of X is associated with a subcarrier spacing.

In a possible design, a quantity P1 of levels included in the first signal is directly proportional to a value of N.

In a possible design, the quantity P1 of levels included in the first signal satisfies: $P 1 = M * K * N * X ,$ where $0 < X < 1 ,$ K is a quantity of levels included in one OFDM symbol when N is equal to 1, and K is a positive integer.

In a possible design, when K is equal to 6, the quantity P1 of levels included in the first signal is an integer not less than 2, and the quantity P2 of levels included in the second signal is an integer not less than 2 or an integer not less than 4.

In a possible design, X is 1/3 or 1/2 when M is equal to 1 and K is equal to 6.

In a possible design, the duration of the first time domain resource is equal to the duration of the M OFDM symbols; and the synchronization signal further includes a third signal, the third signal is before the first signal, and any level included in the third signal is a second level;
a duration T3 of the third signal satisfies: $T 3 = M * T - T 1 - T 2 ;$ and
a quantity P3 of levels included in the third signal satisfies: $P 3 = M * K * N - P 1 - P 2 ,$ where
K is a quantity of levels included in one OFDM symbol when N is equal to 1, and K is a positive integer.

In a possible design, P2 is equal to 4.

### In still another design:

The transceiver unit 1120 is configured to receive a synchronization signal on a first time domain resource and a first frequency domain resource, where a duration of the first time domain resource is less than or equal to a duration of M orthogonal frequency division multiplexing OFDM symbols, the first frequency domain resource includes N×12 subcarriers, and both M and N are positive integers, where
a modulation scheme of the synchronization signal is on-off keying OOK, the synchronization signal includes a first signal and a second signal, the first signal indicates that the second signal is after and adjacent to the first signal, the second signal is used for time calibration, the sum of a duration T1 of the first signal and a duration of a first level in the second signal is a fixed value, and a quantity P2 of levels included in the second signal is a fixed value.

The processing unit 1110 is configured to parse the synchronization signal.

In a possible design, any level included in the first signal is a first level.

In a possible design, the second signal includes at least one first level and at least one second level, a quantity of first levels included in the second signal is equal to a quantity of second levels, the second level is higher than the first level, and a duration of the second level is equal to a duration of the first level.

In a possible design, a level adjacent to any first level included in the second signal is the second level, a level adjacent to any second level included in the second signal is the first level, and the second level is higher than the first level.

In a possible design, a duration T2 of the second signal is inversely proportional to a value of N.

In a possible design, a duration of one OFDM symbol is T;
the duration T1 of the first signal satisfies: $T 1 = M * T * X - M * T / K * N ;$ and
the duration T2 of the second signal satisfies: $T 2 = M * T * \left(1-X\right) / N ,$
where 0<X<1, and when M=1, a value of X is associated with a subcarrier spacing.

In a possible design, the sum of a quantity P1 of levels included in the first signal and 1 is directly proportional to a value of N.

In a possible design, the quantity P1 of levels included in the first signal satisfies: $P 1 = M * K * N * X - 1 ,$ where $0 < X < 1 ,$ K is a quantity of levels included in one OFDM symbol when N is equal to 1, and K is a positive integer.

In a possible design, when K is equal to 6, the quantity P1 of levels included in the first signal is an integer not less than 2, and the quantity P2 of levels included in the second signal is an integer not less than 2 or an integer not less than 4.

In a possible design, X is 1/3 or 1/2 when M is equal to 1 and K is equal to 6.

In a possible design, the duration of the first time domain resource is equal to the duration of the M OFDM symbols; and the synchronization signal further includes a third signal, the third signal is before the first signal, and any level included in the third signal is a second level;
a duration T3 of the third signal satisfies: $T 3 = M * T - T 1 - T 2 ;$ and
a quantity P3 of levels included in the third signal satisfies: $P 3 = M * K * N - P 1 - P 2 ,$ where
K is a quantity of levels included in one OFDM symbol when N is equal to 1, and K is a positive integer.

In a possible design, P2 is equal to 4.

For another possible implementation of the communication apparatus, refer to the related descriptions of the function of the related device in the method embodiment corresponding to FIG. 4. Details are not described herein again.

As shown in FIG. 12, the communication apparatus 1200 includes a processor 1210 and an interface circuit 1220. The processor 1210 and the interface circuit 1220 are coupled to each other. It can be understood that the interface circuit 1220 may be a transceiver or an input/output interface. Optionally, the communication apparatus may further include a memory 1230, configured to: store instructions executed by the processor 1210, store input data required by the processor 1210 to run instructions, or store data generated after the processor 1210 runs instructions.

When the communication apparatus is configured to implement the methods in the foregoing method embodiments, the processor 1210 is configured to perform a function of the processing unit 1110, and the interface circuit 1220 is configured to perform a function of the transceiver unit 1120.

When the communication apparatus is a chip used in a network device, the chip implements a function of the network device in the foregoing method embodiments. The chip receives information from another device; or the network device chip sends information to another device.

When the communication apparatus is a chip used in a (passive or semi-passive) tag, the (passive or semi-passive) tag chip implements a function of the (passive or semi-passive) tag in the foregoing method embodiment, and the (passive or semi-passive) tag chip receives information from another device; or the (passive or semi-passive) tag chip sends information to another device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented by hardware, or may be implemented by the processor executing software instructions. The software instructions may include a corresponding software module. The software module may be stored in a random access memory (random access memory, RAM), a flash memory, a read-only memory (Read-Only Memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or (passive or semi-passive) tag. Certainly, the processor and the storage medium may also exist in a network device or (passive or semi-passive) tag as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer program or the instructions are loaded and executed on a computer, the procedures or functions in embodiments of this application are all or partially executed. The computer may be a general-purpose computer, a dedicated computer, a computer network, or other programmable apparatuses. The computer program or the instructions may be stored in a computer-readable storage medium, or may be transmitted through the computer-readable storage medium. The computer-readable storage medium may be any usable medium that can be accessed by a computer, or a data storage device, such as a server, integrating one or more usable media. The usable medium may be a magnetic medium, for example, a floppy disk, a hard disk, or a magnetic tape; or may be an optical medium, for example, a digital versatile disc (digital versatile disc, DVD); or may be a semiconductor medium, for example, a solid-state drive (solid-state drive, SSD).

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

An embodiment of this application further provides a computer-readable storage medium. The computer-readable storage medium stores computer-executable instructions. When the computer-executable instructions are executed, the method performed by the network device or (passive or semi-passive) tag in the foregoing method embodiments is implemented.

An embodiment of this application further provides a computer program product. The computer program product includes a computer program. When the computer program is executed, the method performed by the network device or (passive or semi-passive) tag in the foregoing method embodiments is implemented.

An embodiment of this application further provides a communication system. The communication system includes a network device and a (passive or semi-passive) tag. The network device is configured to perform the method performed by the network device in the foregoing method embodiments. The (passive or semi-passive) tag is configured to perform the method performed by the (passive or semi-passive) tag in the foregoing method embodiments.

An embodiment of this application further provides a communication method. The network device is configured to perform the method performed by the network device in the foregoing method embodiments. The (passive or semi-passive) tag is configured to perform the method performed by the (passive or semi-passive) tag in the foregoing method embodiment.

It should be noted that, for brief description, the foregoing method embodiments are represented as a series of actions. However, persons skilled in the art should appreciate that this application is not limited to the described order of the actions, because according to this application, some steps may be performed in other orders or simultaneously. In addition, persons skilled in the art should also appreciate that all embodiments described in this specification are example embodiments, and the related actions and modules are not necessarily required by this application.

Descriptions of embodiments provided in this application may refer to each other, and descriptions of embodiments has different focuses. For a part that is not described in detail in an embodiment, refer to related descriptions in another embodiment. For ease of description and brevity, for functions and performed steps of the apparatuses and devices provided in embodiments of this application, refer to related descriptions in the method embodiments of this application. Mutual reference, combination, or reference may be made between the method embodiments and between the apparatus embodiments.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A communication method, comprising:
determining a synchronization signal; and
sending the synchronization signal on a first time domain resource and a first frequency domain resource, wherein a duration of the first time domain resource is less than or equal to a duration of M orthogonal frequency division multiplexing OFDM symbols, the first frequency domain resource comprises N*12 subcarriers, and both M and N are positive integers, wherein
a modulation scheme of the synchronization signal is on-off keying OOK, the synchronization signal comprises a first signal and a second signal, the first signal indicates that the second signal is after and adjacent to the first signal, the second signal is used for time calibration, and both a duration T1 of the first signal and a quantity P2 of levels comprised in the second signal are fixed values.

2. The method according to claim 1, wherein any level comprised in the first signal is a first level.

3. The method according to claim 1 or 2, wherein the second signal comprises at least one first level and at least one second level, a quantity of first levels comprised in the second signal is equal to a quantity of second levels, the second level is higher than the first level, and a duration of the second level is equal to a duration of the first level.

4. The method according to any one of claims 1 to 3, wherein a level adjacent to any first level comprised in the second signal is the second level, a level adjacent to any second level comprised in the second signal is the first level, and the second level is higher than the first level.

5. The method according to any one of claims 1 to 4, wherein a duration T2 of the second signal is inversely proportional to a value of N.

6. The method according to any one of claims 1 to 5, wherein a duration of one OFDM symbol is T;
the duration T1 of the first signal satisfies: $T 1 = M * T * X ;$ and
the duration T2 of the second signal satisfies: $T 2 = M * T * \left(1-X\right) / N ,$
wherein 0<X<1, and when M=1, a value of X is associated with a subcarrier spacing.

7. The method according to any one of claims 1 to 5, wherein a quantity P1 of levels comprised in the first signal is directly proportional to a value of N.

8. The method according to any one of claims 1 to 7, wherein
the quantity P1 of levels comprised in the first signal satisfies: $P 1 = M * K * N * X ,$ wherein $0 < X < 1 ,$ K is a quantity of levels comprised in one OFDM symbol when N is equal to 1, and K is a positive integer.

9. The method according to claim 8, wherein
when K is equal to 6, the quantity P1 of levels comprised in the first signal is an integer not less than 2, and the quantity P2 of levels comprised in the second signal is an integer not less than 2 or an integer not less than 4.

10. The method according to claim 8 or 9, wherein X is 1/3 or 1/2 when M is equal to 1 and K is equal to 6.

11. The method according to any one of claims 1 to 10, wherein the duration of the first time domain resource is equal to the duration of the M OFDM symbols; and the synchronization signal further comprises a third signal, the third signal is before the first signal, and any level comprised in the third signal is a second level;
a duration T3 of the third signal satisfies: $T 3 = M * T - T 1 - T 2 ;$ and
a quantity P3 of levels comprised in the third signal satisfies: $P 3 = M * K * N - P 1 - P 2 ,$ wherein
K is a quantity of levels comprised in one OFDM symbol when N is equal to 1, and K is a positive integer.

12. The method according to any one of claims 1 to 11, wherein P2 is equal to 4.

13. A communication method, comprising:
receiving a synchronization signal on a first time domain resource and a first frequency domain resource, wherein a duration of the first time domain resource is less than or equal to a duration of M orthogonal frequency division multiplexing OFDM symbols, the first frequency domain resource comprises N*12 subcarriers, and both M and N are positive integers, wherein
a modulation scheme of the synchronization signal is on-off keying OOK, the synchronization signal comprises a first signal and a second signal, the first signal indicates that the second signal is after and adjacent to the first signal, the second signal is used for time calibration, and both a duration T1 of the first signal and a quantity P2 of levels comprised in the second signal are fixed values.

14. The method according to claim 13, wherein any level comprised in the first signal is a first level.

15. The method according to claim 13 or 14, wherein the second signal comprises at least one first level and at least one second level, a quantity of first levels comprised in the second signal is equal to a quantity of second levels, the second level is higher than the first level, and a duration of the second level is equal to a duration of the first level.

16. The method according to any one of claims 13 to 15, wherein a level adjacent to any first level comprised in the second signal is the second level, a level adjacent to any second level comprised in the second signal is the first level, and the second level is higher than the first level.

17. The method according to any one of claims 13 to 16, wherein a duration T2 of the second signal is inversely proportional to a value of N.

18. The method according to any one of claims 13 to 17, wherein a duration of one OFDM symbol is T;
the duration T1 of the first signal satisfies: $T 1 = M * T * X ;$ and
the duration T2 of the second signal satisfies: $T 2 = M * T * \left(1-X\right) / N ,$
wherein 0<X<1, and when M=1, a value of X is associated with a subcarrier spacing.

19. The method according to any one of claims 13 to 17, wherein a quantity P1 of levels comprised in the first signal is directly proportional to a value of N.

20. The method according to any one of claims 13 to 19, wherein
the quantity P1 of levels comprised in the first signal satisfies: $P 1 = M * K * N * X ,$ wherein $0 < X < 1 ,$ K is a quantity of levels comprised in one OFDM symbol when N is equal to 1, and K is a positive integer.

21. The method according to claim 20, wherein
when K is equal to 6, the quantity P1 of levels comprised in the first signal is an integer not less than 2, and the quantity P2 of levels comprised in the second signal is an integer not less than 2 or an integer not less than 4.

22. The method according to claim 20 or 21, wherein X is 1/3 or 1/2 when M is equal to 1 and K is equal to 6.

23. The method according to any one of claims 13 to 22, wherein the duration of the first time domain resource is equal to the duration of the M OFDM symbols; and the synchronization signal further comprises a third signal, the third signal is before the first signal, and any level comprised in the third signal is a second level;
a duration T3 of the third signal satisfies: $T 3 = M * T - T 1 - T 2 ;$ and
a quantity P3 of levels comprised in the third signal satisfies: $P 3 = M * K * N - P 1 - P 2 ,$ wherein
K is a quantity of levels comprised in one OFDM symbol when N is equal to 1, and K is a positive integer.

24. The method according to any one of claims 13 to 23, wherein P2 is equal to 4.

25. A communication apparatus, comprising a unit or a module configured to perform the method according to any one of claims 1 to 12, or comprising a unit or a module configured to perform the method according to any one of claims 13 to 24.

26. A communication apparatus, comprising a processor and a transceiver, wherein the processor and the transceiver are configured to: implement the method according to any one of claims 1 to 12, or implement the method according to any one of claims 13 to 24.

27. A computer-readable storage medium, wherein the storage medium stores a computer program or instructions, and when the computer program or the instructions are executed by a communication apparatus, the method according to any one of claims 1 to 12 is implemented, or the method according to any one of claims 13 to 24 is implemented.

28. A computer program product, comprising computer program code, wherein when the computer program code is run on a computer, the method according to any one of claims 1 to 12 is implemented, or the method according to any one of claims 13 to 24 is implemented.

29. A communication system, comprising a communication apparatus configured to implement the method according to any one of claims 1 to 12, and a communication apparatus configured to implement the method according to any one of claims 13 to 24.

30. A communication method, wherein a network device is configured to perform the method according to any one of claims 1 to 12, and a tag is used to perform the method according to any one of claims 13 to 24.
